# EUROPEAN PATENT APPLICATION

(11) **EP 4 722 563 A1**
(43) Date of publication of application: **08.04.2026**
(21) Application number: 24815635.8
(22) Date of filing: 31.05.2024
(51) Int. Cl.: F16H 19/02, B25J 19/00

(54) **PROJECTION-TYPE LINEAR ACTUATOR**

(30) Priority: 02.06.2023 JP 2023091999
(71) Applicant: Robosapiens Inc., Tokyo 160-0023 (JP)
(72) Inventor: NAGAO Shun, Tokyo 160-0023 (JP)
(74) Representative: Strehl & Partner mbB
(86) International application number: PCT/JP2024/020123
(87) International publication number: WO 2024/248156

(57) **Abstract**

To provide a protruding type linear actuator that can improve operability as compared with the related art. Since a protruding type linear actuator 10 can accommodate a pair of wound portions 25a, 25b, a drive roller 30a, and a rotary encoder 30b inside a housing to make them not exposed to the outside, for example, even when the protruding type linear actuator 10 is attached to a slider of an arm robot, the wound portions 25a, 25b, the drive roller 30a, and the rotary encoder 30b do not come into contact with other portions such as the slider, and an attachment work can be performed without considering positions of the wound portions 25a, 25b, the drive roller 30a, and the rotary encoder 30b. Therefore, operability can be improved as compared with the related art.

## Description

### Technical Field

The present invention relates to a protruding type linear actuator.

### Background Art

As a protruding type linear actuator, Patent Literature 1 discloses a configuration that includes a slider formed by a pressing element, which is obtained by bending and overlapping free end portions of elongated plates extending respectively from a pair of wound portions at approximately right angles and coupling the free end portions of the pair of elongated plates, a drive portion that causes the slider to reciprocate linearly along a guide frame, and a gear that rotates clockwise and counterclockwise to cause the pressing element to reciprocate linearly.

### Citation List

### Patent Literature

Patent Literature 1: JP6944227B

### Summary of Invention

### Technical Problem

However, in the protruding type linear actuator in the related art, the pair of wound portions, the clockwise/counterclockwise rotation gear, and the like are exposed to the outside, and therefore, when the protruding type linear actuator is mounted on an arm robot, a self-propelled robot, or the like, it is necessary to ensure that the pair of wound portions, the clockwise/counterclockwise rotation gear, and the like do not come into contact with each portion of the arm robot or the self-propelled robot. Therefore, it has been desired to improve operability of the protruding type linear actuator.

The present invention has been made in view of the above-described problems, and an object of the present invention is to provide a protruding type linear actuator that can improve the operability as compared with the related art.

### Solution to Problem

A protruding type linear actuator according to the present invention includes: a pair of wound portions arranged to face each other, around which elongated plates are respectively wound spirally; a housing configured to accommodate the pair of wound portions therein, bring the elongated plates into contact with each other such that the elongated plates extending respectively from the pair of wound portions are overlapped with each other, and cause overlapped free end portions of the pair of elongated plates to protrude to the outside from an opening; a drive roller accommodated in the housing and configured to abut against one surface of the pair of overlapped elongated plates to move the pair of elongated plates along a longitudinal direction of the elongated plates; and a rotatable roller accommodated in the housing, disposed to face the drive roller, and configured to sandwich the pair of overlapped elongated plates between the drive roller and the rotatable roller, in which the housing includes a housing body including a pair of wound portion accommodation recesses configured to respectively accommodate the pair of wound portions, and a roller accommodation recess configured to accommodate the drive roller and the rotatable roller, and a lid portion configured to be detachably fixed to a body-side installation surface of the housing body in which the pair of wound portion accommodation recesses and the roller accommodation recess are formed, and to be integrated with the housing body to cover the pair of wound portions respectively accommodated in the pair of wound portion accommodation recesses, and the drive roller and the rotatable roller accommodated in the roller accommodation recess, and the elongated plates are pulled out from the pair of wound portions or wound around the pair of wound portions, causing the pair of elongated plates protruding from the opening of the housing to reciprocate linearly outside the housing.

### Advantageous Effects of Invention

According to the present invention, since a pair of wound portions, a drive roller, and a rotatable roller can be accommodated inside a housing to make them not exposed to the outside, operability can be improved as compared with the related art.

### Brief Description of Drawings

Fig. 1 is a perspective view illustrating a configuration of an arm robot including a protruding type linear actuator according to a first embodiment.
Fig. 2 is a perspective view illustrating a configuration of the arm robot viewed from a direction different from that in Fig. 1.
Fig. 3 is a schematic diagram illustrating an internal configuration of the protruding type linear actuator at the time when a pair of elongated plates are pulled out, in which a lid portion illustrated in Figs. 1 and 2 is omitted.
Fig. 4 is a schematic diagram illustrating an internal configuration of the protruding type linear actuator at the time when the pair of elongated plates are wound, in which the lid portion illustrated in Figs. 1 and 2 is omitted.
Fig. 5 is a schematic diagram illustrating a configuration of a housing body.
Fig. 6 is an enlarged detailed view illustrating a configuration of a roller accommodation recess.
Fig. 7 is a schematic diagram illustrating a configuration of the lid portion.
Fig. 8 is a schematic diagram illustrating a configuration of a protruding type linear actuator according to a second embodiment.
Fig. 9 is a schematic diagram illustrating an internal configuration of a protruding type linear actuator according to a second embodiment.
Fig. 10 is a schematic diagram illustrating a configuration of a wound portion according to the second embodiment.
Fig. 11 is a schematic diagram illustrating a configuration of an elongated plate fixed to the wound portion.
Fig. 12 is a schematic diagram illustrating a configuration of a housing body at the time when the lid portion is removed.
Fig. 13 is a schematic diagram illustrating a configuration of a lid portion according to the second embodiment provided with a drive roller and a rotary encoder.
Fig. 14 is a schematic diagram illustrating an arrangement position of a stopper mechanism with respect to the wound portions.
Fig. 15 is a schematic diagram illustrating a configuration of the stopper mechanism.
Fig. 16 is a partial cross-sectional view illustrating an example of configurations of the drive roller and a rotatable roller that press centers in width directions of the pair of overlapped elongated plates.
Fig. 17 is a cross-sectional view taken along line XVII-XVII in Fig. 16.
Fig. 18 is a schematic diagram illustrating an internal configuration of a protruding type linear actuator according to a first modification, in which the lid portion is omitted.
Fig. 19 is a schematic diagram illustrating a configuration of a protruding type linear actuator according to a second modification, in which the pair of elongated plates and a pressing element are omitted.
Fig. 20 is a schematic diagram illustrating an internal configuration of the protruding type linear actuator, in which a lid portion illustrated in Fig. 19 is omitted.
Fig. 21 is a schematic diagram illustrating a configuration of a protruding type linear actuator according to a third modification, in which the pair of elongated plates and the pressing element are omitted.
Fig. 22 is a schematic diagram illustrating an internal configuration of the protruding type linear actuator, in which a lid portion illustrated in Fig. 21 is omitted.

### Description of Embodiments

Hereinafter, embodiments of the present invention will be described in detail with reference to the drawings. In the following description, the same components are denoted by the same reference numerals, and redundant description will be omitted.

### (1) First Embodiment

### (1-1) <Configuration of Arm Robot Having Protruding Type Linear Actuator According to First Embodiment>

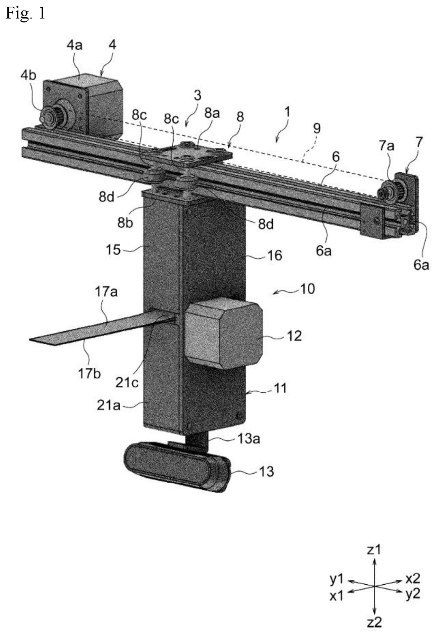

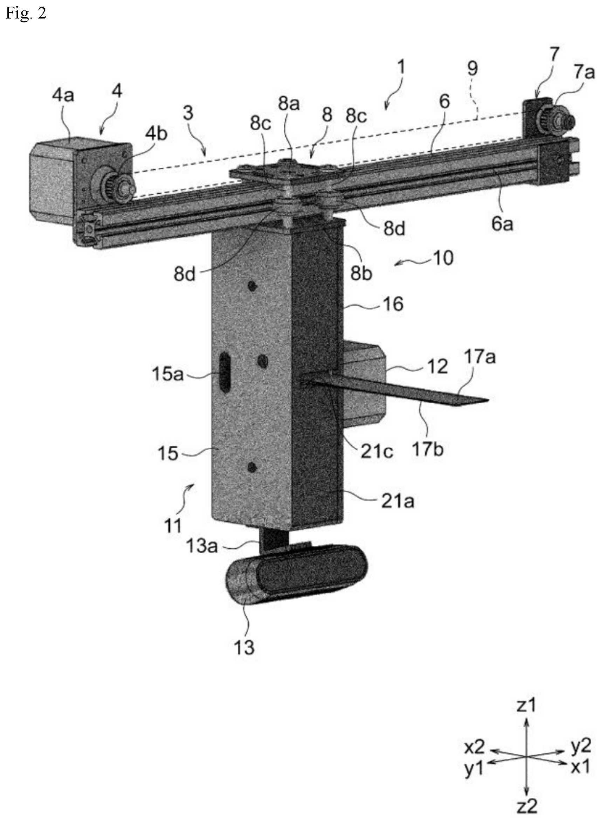

Figs. 1 and 2 are each a schematic diagram illustrating a configuration of an arm robot 1 including a protruding type linear actuator 10 according to the present embodiment. In Figs. 1 and 2, x1 and x2 indicate an extension/retraction direction in which a pair of elongated plates 17a, 17b pulled out from the protruding type linear actuator 10 extend and retract, x1 indicates a direction in which free end portions of the pair of elongated plates 17a, 17b move away from the protruding type linear actuator 10, and x2 indicates a direction in which the free end portions of the pair of elongated plates 17a, 17b move toward the protruding type linear actuator 10. y1 and y2 each indicate a width direction of the elongated plates 17a and 17b, which is perpendicular to a longitudinal direction of the pair of elongated plates 17a, 17b.

z1 and z2 each indicate a surface normal direction of the elongated plates 17a, 17b, which is orthogonal to both the extension/retraction directions x1 and x2 and the width directions y1 and y2 of the pair of elongated plates 17a and 17b. In the present embodiment, the protruding type linear actuator 10 may be disposed such that the surface normal directions z1 and z2 are in a height direction of the arm robot 1, or the protruding type linear actuator 10 may be disposed such that the surface normal directions z1 and z2 are in a horizontal direction of the arm robot 1.

The arm robot 1 according to the present embodiment includes the protruding type linear actuator 10 and a movement mechanism 3 that moves the protruding type linear actuator 10 in the width directions y1 and y2. Here, the arm robot 1 in which the protruding type linear actuator 10 is moved in the width directions y1 and y2 by the movement mechanism 3 and the protruding type linear actuator 10 is disposed at a desired position in the width directions y1 and y2 will be described as an example, but the present invention is not limited thereto. For example, in addition to an arm robot that does not include the movement mechanism 3, an arm robot that includes another movement mechanism in addition to the movement mechanism 3 to move the protruding type linear actuator 10 in the surface normal directions z1 and z2 or to rotate the protruding type linear actuator 10 in a circumferential direction with the surface normal directions z1 and z2 as rotation axes may be applied.

The arm robot 1 pulls out the pair of elongated plates 17a, 17b from the protruding type linear actuator 10 positioned at a desired position by the movement mechanism 3, and causes the free end portions of the elongated plates 17a, 17b to protrude in the x1 direction. The arm robot 1 can protrude a pressing element (not illustrated in Figs. 1 and 2) provided at the free end portions of the elongated plates 17a, 17b, and use the pressing element to press down an object such as a button of an elevator located on an extension line of the extension/retraction directions x1 and x2 or various buttons in a factory facility can be pressed.

The protruding type linear actuator 10 can accommodate the pair of elongated plates 17a, 17b, from which the pressing element is protruded, inside the housing 11, and can cause the pressing element provided at the free end portions of the elongated plates 17a, 17b to reciprocate linearly along the extension/retraction directions x1 and x2.

The movement mechanism 3 includes a guide rail 6 made of lightweight aluminum or aluminum alloy, an actuator drive portion 4 provided at one end of the guide rail 6, a support member 7 provided at the other end of the guide rail 6, a belt 9 stretched between the actuator drive portion 4 and the support member 7, and a slider 8 that can move between the actuator drive portion 4 and the support member 7 along the guide rail 6. Here, a longitudinal direction of the guide rail 6 is set to extend in the width directions y1 and y2.

The actuator drive portion 4 is provided with a drive pulley 4b rotated by a drive portion 4a such as a motor, and the support member 7 is provided with a driven pulley 7a. The belt 9 provided with the slider 8 is wound and stretched between the drive pulley 4b of the actuator drive portion 4 and the driven pulley 7a of the support member 7. The actuator drive portion 4 rotates the drive pulley 4b clockwise and counterclockwise, thereby rotating the belt 9 stretched between the drive pulley 4b and the driven pulley 7a clockwise and counterclockwise, and causing the slider 8 fixed to the belt 9 to reciprocate linearly along the longitudinal direction of the guide rail 6.

The slider 8 includes a pair of support plates 8a, 8b sandwiching the guide rail 6, a plurality of connecting pins 8c that connect the support plates 8a, 8b sandwiching the guide rail 6, and slide rollers 8d rollably provided on the respective connecting pins 8c. The slide roller 8d is positioned in a guide groove 6a formed along the longitudinal direction of the guide rail 6, and is rotatably disposed in the guide groove 6a.

In the slider 8, the support plate 8a is coupled to the belt 9, and the slider 8 is pulled by movement of the belt 9 in the circumferential direction, causing the slide roller 8d to roll and move along the longitudinal direction of the guide rail 6. In the slider 8, the protruding type linear actuator 10 is fixed to the support plate 8b, and the protruding type linear actuator 10 is moved along the longitudinal direction of the guide rail 6 by the movement of the belt 9.

The protruding type linear actuator 10 includes a housing 11 formed in a rectangular shape, and one end of the housing 11 is fixed to the support plate 8b of the slider 8. The housing 11 according to the present embodiment has, for example, a rectangular parallelepiped shape and is made of plastic, metal, or the like. In the present embodiment, the housing 11 having the rectangular parallelepiped shape is described, but the present invention is not limited thereto, and may have various other shapes such as a cubic shape or a columnar shape.

The housing 11 has an opening 21c formed in a first surface 21a, and the pair of elongated plates 17a, 17b protrude from the inside of the housing 11 to the outside through the opening 21c. In this case, the housing 11 is configured such that a surface normal direction of the first surface 21a is the extension/retraction directions x1 and x2, and the pair of elongated plates 17a, 17b extend from the opening 21c of the first surface 21a along the surface normal direction of the first surface 21a.

The housing 11 is provided with a plate drive device 12 that moves the pair of elongated plates 17a, 17b, and an object recognition device 13 at predetermined positions on outer surfaces of the housing 11. Further, in the housing 11, a through hole 15a, which penetrates a thickness of the housing 11, is formed at a position separated from the guide rail 6 by a predetermined distance. Wiring (not illustrated) extending from the plate drive device 12 and/or the object recognition device 13 passes through the through hole 15a of the housing 11, is guided to the other side, and is connected to a control device (not illustrated) provided at a predetermined position.

In the housing 11, the wiring passes through the through hole 15a, whereby the wiring is bundled together by the through hole 15a. The housing 11 is configured such that the wiring bundled together by the through hole 15a does not come into contact with the guide rail 6 when the protruding type linear actuator 10 moves along the guide rails 6. Accordingly, when the protruding type linear actuator 10 moves along the guide rail 6, the wiring extending from the plate drive device 12 and/or the object recognition device 13 does not hinder the movement, and the protruding type linear actuator 10 can smoothly move along the guide rail 6.

The housing 11 according to the present embodiment includes a box-shaped housing body 15 and a lid portion 16 that covers an opening region of the housing body 15, and has a configuration in which one end portion located in the longitudinal direction of the housing body 15 is coupled to the slider 8. The housing body 15 is provided with the object recognition device 13 via a mounting bracket 13a at the other end portion facing the one end portion.

The object recognition device 13 is, for example, an imaging device, a light detection and ranging (LiDAR) device or a 3D scanner device, and can detect a position of an operation target such as a button pressed by the pressing element based on a captured image acquired by the imaging device or position information acquired by the LiDAR and the 3D scanner device.

The plate drive device 12 is, for example, a motor, and applies a driving force to the pair of elongated plates 17a, 17b to move the elongated plates 17a, 17b along the extension/retraction directions x1 and x2. In the present embodiment, the plate drive device 12 is provided on an outer surface of the lid portion 16, an output shaft of the plate drive device 12 is disposed inside the housing 11 via a through hole (not illustrated) formed in the lid portion 16, and the driving force is transmitted to the elongated plates 17a, 17b inside the housing 11 by a drive roller (described later) coupled to the output shaft.

### (1-2) <Configuration of Protruding Type Linear Actuator According to First Embodiment>

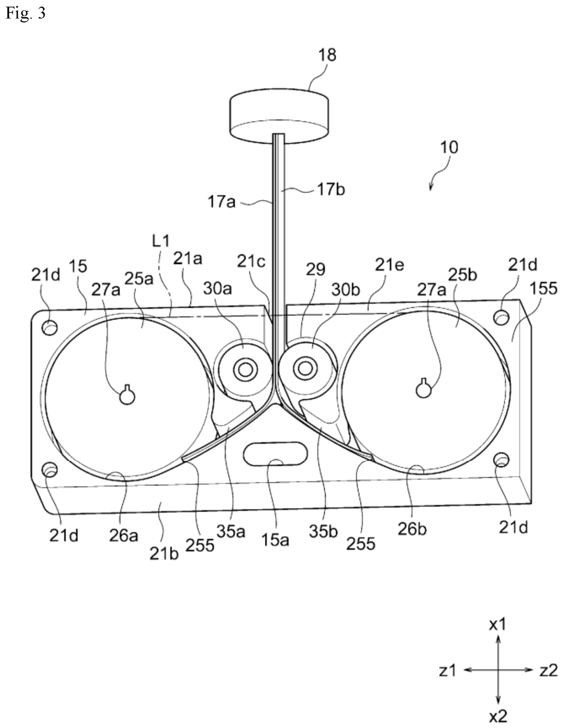

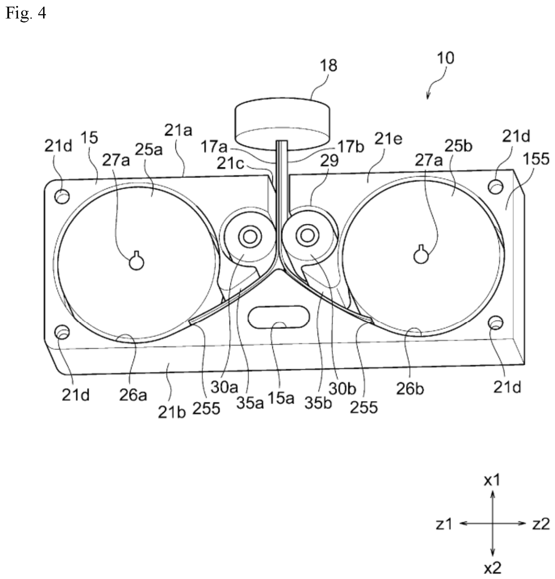

Next, the configuration of the protruding type linear actuator 10 will be described below. Fig. 3 is a schematic diagram illustrating an internal configuration of the protruding type linear actuator 10 at the time when the pair of elongated plates 17a, 17b are pulled out from wound portions 25a, 25b, in which the lid portion 16 illustrated in Figs. 1 and 2 is omitted. Fig. 4 is a schematic diagram illustrating an internal configuration of the protruding type linear actuator 10 at the time when the pair of elongated plates 17a, 17b are wound by the wound portions 25a, 25b, in which the lid portion 16 illustrated in Figs. 1 and 2 is omitted.

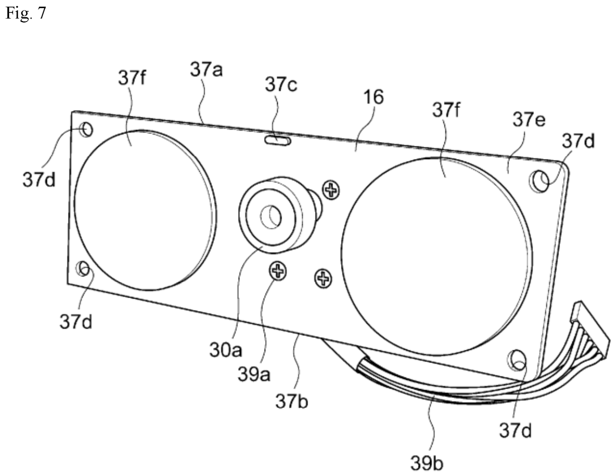

In the housing body 15, a screw hole 21d is formed at each of four corners of a body-side installation surface 21e on which the lid portion 16 (Figs. 1 and 2) is installed. In the protruding type linear actuator 10, insertion holes 37d of the lid portion 16, which will be described later with reference to Fig. 7, are positioned in respective screw holes 21d of the body-side installation surface 21e of the housing body 15, and screws are screwed into the insertion holes 37d of the lid portion 16 and the screw holes 21d of the housing body 15, whereby the housing body 15 and the lid portion 16 are integrated (Figs. 1 and 2), the insertion holes 37d and the screw holes 21d being overlapped with each other, respectively.

In the present embodiment, an outer shape of the body-side installation surface 21e is rectangular, but the present invention is not limited thereto, and the body-side installation surface 21e may be formed in an elliptical shape in accordance with outer peripheral shapes of a pair of wound portions 25a, 25b arranged side by side. In this case, in the lid portion 16, a lid-side installation surface installed on the body-side installation surface 21e of the housing body 15 may have an elliptical shape in accordance with the shape of the body-side installation surface 21e.

The pair of wound portions 25a, 25b, a drive roller 30a, and a rotary encoder 30b, which is a rotatable roller, are accommodated inside the housing body 15. The pair of wound portions 25a, 25b spirally winds the elongated plates 17a, 17b, and are arranged to face each other at a predetermined distance. Here, the pair of wound portions 25a, 25b are located on a second surface 21b side facing the first surface 21a on which the opening 21c of the housing body 15 is formed, and a plate separation portion 255 is disposed at a position where the wound portions 25a, 25b face each other.

The elongated plates 17a, 17b wound around the wound portions 25a, 25b are pulled out from the plate separation portion 255 of the wound portions 25a, 25b into plate guide recesses 35a, 35b described later.

The wound portions 25a, 25b each have a fixed core 27a at a center, and are fixed to the housing body 15 by the fixed cores 27a. The wound portions 25a, 25b each include an elastic member such as a spiral spring therein, and the elastic member applies a force (elastic restoring force) to each of the elongated plates 17a, 17b wound around the wound portions 25a, 25b in a direction of spirally winding a corresponding one of the elongated plates 17a, 17b.

Here, the elongated plates 17a, 17b have sufficient rigidity to maintain a linear form and allow for the linear reciprocation in a state where the elongated plates 17a, 17b are pulled out from the wound portions 25a, 25b and no external force is applied, and have sufficient elasticity to be spirally wound around the wound portions 25a, 25b.

The elongated plates 17a, 17b are each made up of an elongated strip-shaped metal plate, a strip-shaped resin plate, or the like, and are made of aluminum or aluminum alloy in the present embodiment. The elongated plates 17a, 17b according to the present embodiment are formed in the same shape and made of the same member, and a cross section of each free end portion has a shape curved in an arcuate shape. As described above, in the elongated plates 17a, 17b, the cross section of each free end portion has a shape curved in an arcuate shape, which improves linearity and also improves winding ability within the wound portions 25a, 25b. In addition, the pressing element 18 is provided at the free end portions in a state where the elongated plates 17a, 17b are overlapped with each other such that concave surfaces on front surfaces face outward and convex portions on back surfaces abut each other.

The elongated plates 17a, 17b extend from the pair of wound portions 25a, 25b inside the housing body 15 to approach each other and abut against each other, and are sandwiched between the drive roller 30a and the rotary encoder 30b. The elongated plates 17a, 17b pass between the drive roller 30a and the rotary encoder 30b in an overlapped state, and the free end portions of the elongated plates 17a, 17b protrude toward the outside from the opening 21c formed in the first surface 21a of the housing body 15.

The drive roller 30a and the rotary encoder 30b are disposed between the pair of wound portions 25a, 25b provided in the housing body 15. In the present embodiment, the drive roller 30a and the rotary encoder 30b are disposed within a region that is between the pair of wound portions 25a, 25b arranged to face each other and does not exceed an imaginary line L1 connecting top portions of outer peripheries of the pair of wound portions 25a, 25b. Since a size in a plan view of the housing body 15 of the protruding type linear actuator 10 needs only be large enough to enclose the pair of wound portions 25a, 25b, the housing 11 can be made smaller, for example, by reducing a region beyond the imaginary line L1.

The drive roller 30a is formed in a columnar shape, and has an outer peripheral surface made of a soft resin member such as urethane. The drive roller 30a is coupled to the output shaft of the plate drive device 12 (Figs. 1 and 2) provided on the lid portion 16 (not illustrated), and is rotated clockwise and counterclockwise by a driving force applied by the plate drive device 12. The drive roller 30a is disposed such that a rotation axis is parallel to rotation axes of the pair of wound portions 25a, 25b, and a circumferential direction is the same as a circumferential direction of the pair of wound portions 25a, 25b.

The rotary encoder 30b serving as the rotatable roller is formed in a columnar shape, and has an outer peripheral surface made of a soft resin member such as urethane. A diameter of the rotary encoder 30b according to the present embodiment is selected to be approximately the same as a diameter of the drive roller 30a, but the present invention is not limited thereto. The diameter of the rotary encoder 30b may be larger or smaller than the diameter of the drive roller 30a, or the diameter of the rotary encoder 30b may be different from the diameter of the drive roller 30a. The diameters of the drive roller 30a and the rotary encoder 30b are each about 1/2 of diameters of the wound portions 25a, 25b, and are selected to be smaller than the diameters of the wound portions 25a, 25b.

The rotary encoder 30b is disposed to face the drive roller 30a, and the pair of overlapped elongated plates 17a, 17b is sandwiched between the drive roller 30a and the rotary encoder 30b. The rotary encoder 30b is disposed such that a rotation axis is parallel to the rotation axes of the pair of wound portions 25a, 25b and the drive roller 30a, and a circumferential direction is the same as the circumferential direction of the pair of wound portions 25a, 25b and the drive roller 30a.

The rotary encoder 30b is coupled to an output shaft of a measurement circuit provided on an outer surface of the housing body 15, and is rotated clockwise and counterclockwise in conjunction with movement of the elongated plates 17a, 17b moved by clockwise and counterclockwise rotation of the drive roller 30a. The measurement circuit is configured to be capable of measuring a position of the pressing element 18 in the extension/retraction directions x1 and x2 by determining a movement direction and a movement distance of the free end portions of the elongated plates 17a, 17b during extension and retraction based on a rotation direction and the number of rotations of the rotary encoder 30b that rotates in conjunction with the extension and retraction of the elongated plates 17a, 17b.

In the housing body 15, the through hole 15a, which penetrates the thickness along a rotation axis direction of the pair of wound portions 25a, 25b, is formed in a region between the elongated plates 17a, 17b before the elongated plates 17a, 17b converge. The elongated plates 17a, 17b are pulled out from the pair of wound portions 25a, 25b and converge between the drive roller 30a and the rotary encoder 30b.

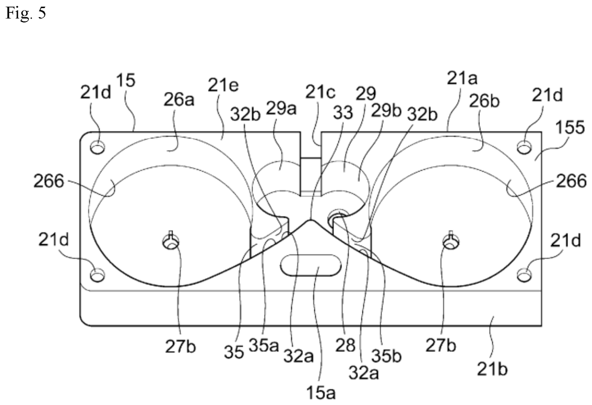

Fig. 5 is a schematic diagram illustrating a configuration of the housing body 15. As illustrated in Fig. 5, a pair of wound portion accommodation recesses 26a, 26b, a roller accommodation recess 29, the plate guide recess 35a that allows the wound portion accommodation recess 26a and the roller accommodation recess 29 to communicate with each other, and a plate guide recess 35b that allows the wound portion accommodation recess 26b and the roller accommodation recess 29 to communicate with each other are formed on the body-side installation surface 21e of the housing body 15. In this case, the housing body 15 according to the present embodiment is made of a hard resin member such as plastic, and includes a solid portion 155 made of the hard resin member in a region of the body-side installation surface 21e where the pair of wound portion accommodation recesses 26a, 26b, the roller accommodation recess 29, and the plate guide recesses 35a, 35b are not formed. In the body-side installation surface 21e, the screw holes 21d are formed at four corners, and the through hole 15a is formed between the pair of wound portion accommodation recesses 26a, 26b.

The pair of wound portion accommodation recesses 26a, 26b are bottomed grooves formed symmetrically on the left and right, and are each formed in a columnar shape in accordance with respective outer shapes of the wound portions 25a, 25b. Diameters of the wound portion accommodation recesses 26a, 26b are selected to be slightly larger than the diameters of the wound portions 25a, 25b, thereby reducing a size of the housing body 15. A hole 27b is formed at a center of the bottom of each of the wound portion accommodation recesses 26a, 26b, the fixed core 27a of each of the wound portions 25a, 25b is press-fitted into the hole 27b, thereby fixing the wound portions 25a, 25b inside the wound portion accommodation recesses 26a, 26b.

The plate guide recesses 35a, 35b are formed symmetrically on the left and right, and guide, between the drive roller 30a and the rotary encoder 30b accommodated in the roller accommodation recess 29, the elongated plates 17a, 17b pulled out from the wound portions 25a, 25b that are accommodated in the wound portion accommodation recesses 26a, 26b.

Here, the pair of wound portions 25a, 25b are positioned on the second surface 21b side facing the first surface 21a on which the opening 21c of the housing body 15 is formed, and the plate separation portion 255 is disposed at the position where the wound portions 25a, 25b face each other. The elongated plates 17a, 17b wound around the wound portions 25a, 25b are pulled out from the plate separation portion 255 of the wound portions 25a, 25b into the plate guide recesses 35a, 35b.

The plate guide recesses 35a, 35b are formed to approach each other from the plate separation portion 255 of the wound portions 25a, 25b, from which the elongated plates 17a, 17b are pulled out, toward the roller accommodation recess 29. In the present embodiment, the plate guide recesses 35a, 35b are formed to extend from respective columnar inner peripheral surfaces 266 of the wound portion accommodation recesses 26a, 26b toward the roller accommodation recess 29 along respective tangential directions. The plate guide recesses 35a, 35b each have a first inclined surface 32a and a second inclined surface 32b facing each other, and each of the elongated plates 17a, 17b is inserted into a hollow region between the first inclined surface 32a and the second inclined surface 32b.

The first inclined surfaces 32a of the plate guide recesses 35a, 35b extend from the respective columnar inner peripheral surfaces 266 of the wound portion accommodation recesses 26a, 26b toward the roller accommodation recess 29 along the respective tangential directions. In the plate guide recesses 35a, 35b, tips of the first inclined surfaces 32a extending from the respective inner peripheral surfaces 266 of the wound portion accommodation recesses 26a, 26b along the respective tangential directions are joined to each other to form a triangular vertex portion 33.

The second inclined surfaces 32b of the plate guide recesses 35a, 35b push back in a V shape from the respective columnar inner peripheral surfaces 266 of the wound portion accommodation recesses 26a, 26b along respective tangential directions, and each extend toward the roller accommodation recess 29 to run parallel to the first inclined surface 32a. A V-shaped joint portion 35 between the inner peripheral surface 266 of each of the wound portion accommodation recesses 26a, 26b and the second inclined surface 32b is formed in a smooth curved shape without an acute corner portion at a tip, and has a shape in which the retracting elongated plates 17a, 17b is not easily damaged even when the elongated plates 17a, 17b come into contact with the joint portion 35.

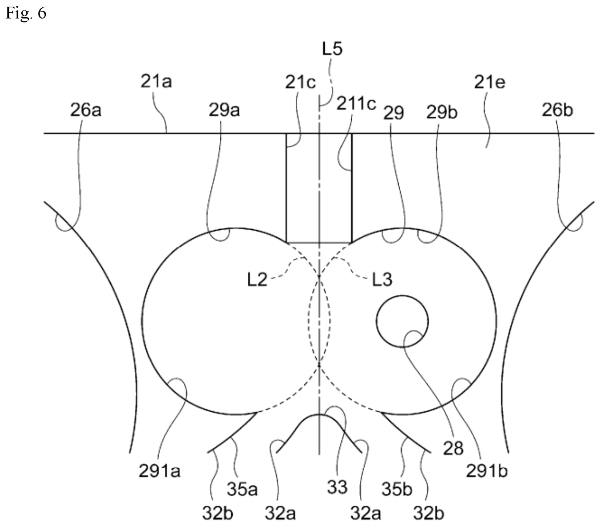

The roller accommodation recess 29 includes a drive roller accommodation recess 29a in which the drive roller 30a is accommodated and a rotatable roller accommodation recess 29b in which the rotary encoder 30b is accommodated, and has a configuration in which the drive roller accommodation recess 29a and the rotatable roller accommodation recess 29b communicate with each other. Fig. 6 is an enlarged detailed view illustrating a configuration of the roller accommodation recess 29.

As illustrated in Fig. 6, an inner peripheral surface 291a of the drive roller accommodation recess 29a is formed in a curved shape along an outer periphery of the drive roller 30a, and forms a columnar space as indicated by a circular imaginary line L2. In the drive roller accommodation recess 29a, one end of the inner peripheral surface 291a is connected to the second inclined surface 32b of the plate guide recess 35a, and the other end of the inner peripheral surface 291a is connected to an inner surface 211c of the opening 21c.

The rotatable roller accommodation recess 29b has an inner peripheral surface 291b formed in a curved shape along an outer periphery of the rotary encoder 30b, and forms a columnar space that partially overlaps with the circular imaginary line L2 of the drive roller accommodation recess 29a as indicated by a circular imaginary line L3. In the rotatable roller accommodation recess 29b, one end of the inner peripheral surface 291b is connected to the second inclined surface 32b of the plate guide recess 35b, and the other end of the inner peripheral surface 291b is connected to the inner surface 211c of the opening 21c. A through hole 28 penetrating a thickness is formed in a bottom surface of the rotatable roller accommodation recess 29b. The output shaft of the measurement circuit provided on the outer surface of the housing body 15 is disposed in the through hole 28, and the rotary encoder 30b is coupled to the output shaft.

In the opening 21c, a central axis L5 of the opening 21c is positioned at a center of a region where the circular imaginary line L2 defined by the inner peripheral surface 291a of the drive roller accommodation recess 29a and the circular imaginary line L3 defined by the inner peripheral surface 291b of the rotatable roller accommodation recess 29b partially overlap. The pair of elongated plates 17a, 17b, which pass between the drive roller 30a and the rotary encoder 30b and are overlapped with each other, are arranged such that a position where the pair of elongated plates 17a, 17b abuts each other is positioned on the central axis L5 of the opening 21c, and move forward and backward in the opening 21c along the central axis L5.

Next, the lid portion 16 fixed to the body-side installation surface 21e of the housing body 15 will be described. Fig. 7 is a schematic diagram illustrating a configuration of the lid portion 16. The lid portion 16 has an edge portion formed in the same outer shape as an outer shape of an edge portion on the body-side installation surface 21e of the housing body 15, and when the lid portion 16 is fixed to the body-side installation surface 21e of the housing body 15, the edge portion of the lid portion 16 coincides with the edge portion of the housing body 15 and can be integrated with the housing body 15.

The lid portion 16 is positioned by abutting a lid-side installation surface 37e against the body-side installation surface 21e of the housing body 15 to cover the body-side installation surface 21e of the housing body 15, and is fixed to the housing body 15 by the screws. In this case, in the lid portion 16, the insertion hole 37d penetrating a thickness is formed at each of four corners, and when the lid portion 16 is positioned on the housing body 15, the insertion holes 37d overlap the respective screw holes 21d (Figs. 3 and 4) of the housing body 15. The screws inserted into the insertion holes 37d are screwed into the screw holes 21d of the housing body 15, and the lid portion 16 is fixed to the housing body 15 and integrated with the housing body 15 (Figs. 1 and 2).

On the lid-side installation surface 37e, convex fitting portions 37f are formed that are to be respectively fitted into the pair of wound portion accommodation recesses 26a, 26b formed in the housing body 15. The fitting portion 37f is formed in a circular convex shape having the same outer shape as a concave shape of the wound portion accommodation recesses 26a, 26b. When the lid portion 16 is positioned on the housing body 15, the fitting portions 37f are fitted into the corresponding wound portion accommodation recesses 26a, 26b, respectively, and abut against the wound portions 25a, 25b accommodated in the wound portion accommodation recesses 26a, 26b.

Since the lid portion 16 can press the wound portions 25a, 25b accommodated in the wound portion accommodation recesses 26a, 26b by the respective fitting portions 37f, the wound portions 25a, 25b can be reliably positioned in the wound portion accommodation recesses 26a, 26b when an impact is applied from the outside.

An opening fitting portion 37c, which is fitted into the opening 21c of the housing body 15 when the lid portion 16 is positioned on the housing body 15, is formed on the lid portion 16. The opening fitting portion 37c can adjust an opening area on an outer surface of the opening 21c through which the pair of elongated plates 17a, 17b enter and exit.

In addition to such a configuration, in the lid portion 16 according to the present embodiment, the drive roller 30a is rotatably provided in advance on the lid-side installation surface 37e. In this case, in the lid portion 16, a through hole (not illustrated) penetrating the thickness is formed at a position where the drive roller 30a is to be installed. The drive roller 30a provided on the lid-side installation surface 37e is coupled, via the through hole, to the output shaft of the plate drive device 12 (Figs. 1 and 2) fixed to the outer surface of the lid portion 16, and can rotate clockwise and counterclockwise by the driving force applied by the plate drive device 12. In the lid portion 16, screws 39a are screwed from the lid-side installation surface 37e to the plate drive device 12, and wiring 39b of the plate drive device 12 is disposed on the outer surface of the lid portion 16.

The protruding type linear actuator 10 according to the present embodiment is assembled as follows. First, the housing body 15, in which the pair of wound portions 25a, 25b and the rotary encoder 30b are provided in advance, and the lid portion 16, on which the drive roller 30a and the plate drive device 12 are provided in advance, are prepared. Then, the lid portion 16 is disposed to cover the body-side installation surface 21e of the housing body 15 such that the drive roller 30a disposed on the lid-side installation surface 37e of the lid portion 16 is accommodated in the drive roller accommodation recess 29a of the housing body 15.

At this time, the fitting portions 37f formed on the lid portion 16 are respectively fitted into the wound portion accommodation recesses 26a, 26b formed in the housing body 15, and the opening fitting portion 37c formed on the lid portion 16 is fitted into the opening 21c formed in the housing body 15. Next, the screw is inserted into the insertion hole 37d of the lid portion 16 overlapping the screw hole 21d of the housing body 15 and is screwed into the screw hole 21d of the housing body 15, so that the lid portion 16 and the housing body 15 can be integrated.

In this case, the pair of elongated plates 17a, 17b can be sandwiched between the drive roller 30a and the rotary encoder 30b only by attaching the lid portion 16 to the body-side installation surface 21e of the housing body 15, and the assemblability is improved. Further, by removing the lid portion 16 from the housing body 15, the drive roller 30a can be easily removed from the lid portion 16, and the rotary encoder 30b can be easily removed from the housing body 15, so that the drive roller 30a and the rotary encoder 30b can be easily replaced.

In addition, when the lid portion 16 is attached to the housing body 15, if an attempt is made to attach the lid portion 16 to the housing body 15 in an inverted orientation along a short side of the lid portion 16, the drive roller 30a and the opening fitting portion 37c abut against the body-side installation surface 21e and cannot be attached, so that the lid portion 16 can be easily positioned in a correct position on the housing body 15.

### (1-3) <Operation and Effect>

In the above-described configuration, in the protruding type linear actuator 10, the pair of wound portions 25a, 25b arranged to face each other, around which the elongated plates 17a, 17b are wound spirally, the drive roller 30a that abuts against one surface of the pair of overlapped elongated plates 17a, 17b to move the pair of elongated plates 17a, 17b along the longitudinal direction of the elongated plates 17a, 17b, and the rotary encoder 30b that sandwiches the pair of overlapped elongated plates 17a, 17b between the drive roller 30a and the rotatable roller 30b are accommodated inside the housing 11, and the pair of wound portions 25a, 25b, the drive roller 30a, and the rotary encoder 30b are not exposed to the outside.

The housing 11 brings the elongated plates 17a, 17b into contact with each other such that the elongated plates 17a, 17b extending from the pair of wound portions 25a, 25b are overlapped with each other, and cause the overlapped free end portions of the pair of elongated plates 17a, 17b to protrude to the outside from the opening 21c. Inside the housing 11, the elongated plates 17a, 17b are pulled out from the pair of wound portions 25a, 25b or wound around the pair of wound portions 25a, 25b, causing the pair of elongated plates 17a, 17b protruding from the opening 21c to the outside to reciprocate linearly outside the housing 11.

In the housing 11, the lid portion 16 is detachably fixed to the body-side installation surface 21e of the housing body 15, and the housing body 15 and the lid portion 16 are integrated. The housing body 15 includes the pair of wound portion accommodation recesses 26a, 26b that accommodate the pair of wound portions 25a, 25b, and the roller accommodation recess 29 that accommodates the drive roller 30a and the rotary encoder 30b. The pair of wound portions 25a, 25b accommodated in the pair of wound portion accommodation recesses 26a, 26b, and the drive roller 30a and the rotary encoder 30b accommodated in the roller accommodation recess 29 are covered with the lid portion 16.

In the protruding type linear actuator 10, by rotating the drive roller 30a, the elongated plates 17a, 17b are pulled out from the wound portions 25a, 25b, and thereafter, the drive roller 30a is brought into a stopped state, and the pressing element 18 is immobile at a predetermined position. The protruding type linear actuator 10 can use the pressing element 18 to press a button of an elevator or the like located on the extension line of the elongated plates 17a, 17b in the longitudinal direction. A pressure sensor may be attached to the pressing element 18 to detect a force with which the pressing element 18 presses a button of an elevator or the like.

The protruding type linear actuator 10 causes the elongated plates 17a, 17b to be wound around the wound portions 25a, 25b by a force applied by the drive roller 30a and a force (elastic restoring force) applied by an elastic member such as a spiral spring provided in the wound portions 25a, 25b. When the elongated plates 17a, 17b are wound around the wound portions 25a, 25b, the pressing element 18 provided at the free end portions abuts against the housing 11, thereby preventing excessive winding of the elongated plates 17a, 17b.

According to the above-described configuration, since the protruding type linear actuator 10 can accommodate the pair of wound portions 25a, 25b, the drive roller 30a, and the rotary encoder 30b inside the housing 11 to make them not exposed to the outside, for example, even when the protruding type linear actuator 10 is attached to the slider 8 of the arm robot 1, the wound portions 25a, 25b, the drive roller 30a, and the rotary encoder 30b do not come into contact with other portions such as the slider 8, and an attachment work can be performed without considering positions of the wound portions 25a, 25b, the drive roller 30a, and the rotary encoder 30b. Therefore, operability can be improved as compared with the related art.

### (2) <Second Embodiment>

### (1-2) <Configuration of Protruding Type Linear Actuator According to Second Embodiment>

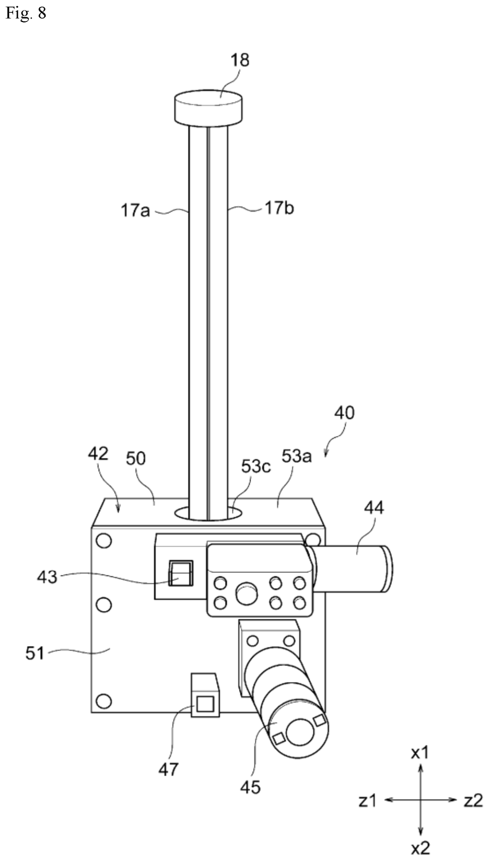

Next, the protruding type linear actuator according to the second embodiment will be described. Fig. 8 is a schematic diagram illustrating a configuration of a protruding type linear actuator 40 according to the second embodiment. The protruding type linear actuator 40 is provided, for example, on the slider 8 of the arm robot 1 or the like similarly to the first embodiment described above, and has a configuration in which an operation target such as a button can be pressed by the pressing element 18.

The protruding type linear actuator 40 includes a rectangular housing 42 made of a hard resin member such as plastic. The housing 42 has an opening 53c formed in a first surface 53a, and the pair of elongated plates 17a, 17b protrude from the inside of the housing 42 to the outside through the opening 53c. In this case, the housing 42 is configured such that a surface normal direction of the first surface 53a is the extension/retraction directions x1 and x2, and the pair of elongated plates 17a, 17b extend from the opening 53c of the first surface 53a along the surface normal direction of the first surface 53a.

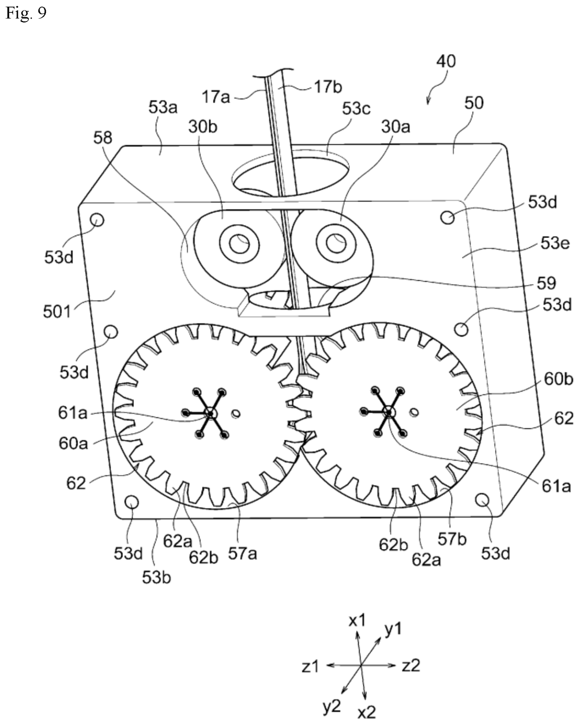

The housing 42 includes a box-shaped housing body 50 and a lid portion 51 that covers an opening region of the housing body 50, and is provided with, on an outer surface, a measurement circuit 43 coupled to the rotary encoder 30b (described later in Fig. 9) provided inside the housing 42, a plate drive device 44, a winding drive device 45, and an attachment portion 47 on which a stopper mechanism described later is installed are provided.

The plate drive device 44 corresponds to the plate drive device 12 according to the first embodiment described above, and is provided on an outer surface of the lid portion 51, and the drive roller 30a (described later in Fig. 9) provided inside the housing 42 is coupled to an output shaft of the plate drive device 44. The plate drive device 44 rotates the drive roller 30a provided inside the housing 42 to apply a driving force to the pair of elongated plates 17a, 17b, thereby pulling out the pair of elongated plates 17a, 17b from the inside to the outside of the housing 42.

The winding drive device 45 is provided on the outer surface of the lid portion 51, and an output shaft of the winding drive device 45 is coupled to a rotation axis of a wound portion 60b (described later in Fig. 9) provided inside the housing 42. The winding drive device 45 rotates the wound portion 60b provided inside the housing 42, and applies a driving force to the wound portion 60b and a wound portion 60a coupled to the wound portion 60b, causing the pair of elongated plates 17a, 17b to be wound around the wound portions 60a, 60b and accommodated inside the housing 42.

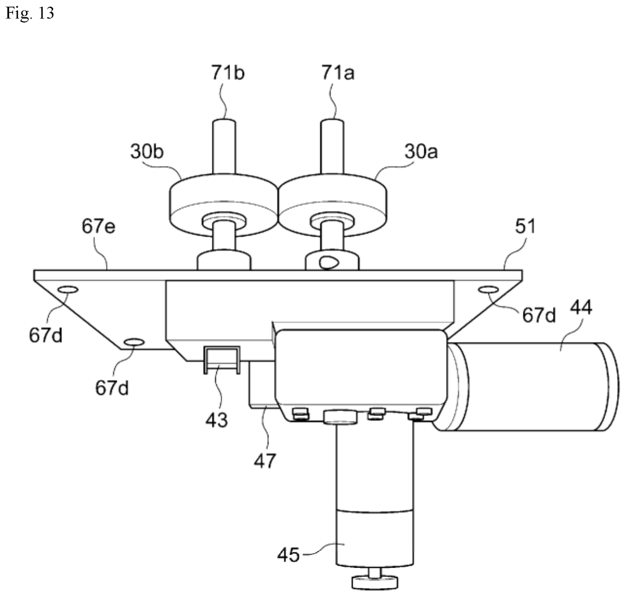

Fig. 9 is a schematic diagram illustrating an internal configuration of the protruding type linear actuator 40, in which the lid portion 51 illustrated in Fig. 8 is omitted. Fig. 9 illustrates, as an example, a configuration in which the rotary encoder 30b abuts against one surface of the elongated plate 17a fed from the wound portion 60a and the drive roller 30a abuts against one surface of the elongated plate 17b fed from the wound portion 60b, and illustrates a configuration in which arrangement positions of the drive roller 30a and the rotary encoder 30b are reversed from those in the first embodiment described above. In the housing body 50, a screw hole 53d is formed at each of four corners of a body-side installation surface 53e on which the lid portion 51 (Fig. 8) is installed. In the protruding type linear actuator 40, communication holes 67d of the lid portion 51, which will be described later with reference to Fig. 13, are positioned in respective screw holes 53d of the body-side installation surface 53e of the housing body 50, and screws are screwed into the communication holes 67d of the lid portion 51 and the screw holes 53d of the housing body 50, whereby the housing body 50 and the lid portion 51 are integrated (Fig. 8), the communication holes 67d and the screw holes 53d being overlapped with each other, respectively.

In the present embodiment, an outer shape of the body-side installation surface 53e is quadrilateral, but the present invention is not limited thereto, and the body-side installation surface 53e may be formed in a convex shape along outer peripheral shapes of the pair of wound portions 60a, 60b arranged side by side, the drive roller 30a, and the rotary encoder 30b. In this case, in the lid portion 51, a lid-side installation surface installed on the body-side installation surface 53e of the housing body 50 may have a convex shape in accordance with the shape of the body-side installation surface 53e.

The pair of wound portions 60a, 60b, the drive roller 30a, and the rotary encoder 30b serving as the rotatable roller are accommodated inside the housing body 50. In this case, a pair of wound portion accommodation recesses 57a, 57b, which accommodate the pair of wound portions 60a, 60b, and a roller accommodation recess 58, which accommodates the drive roller 30a and the rotary encoder 30b, are formed on the body-side installation surface 53e of the housing body 50. An insertion hole 59 through which the pair of elongated plates 17a, 17b is inserted is formed between the wound portion accommodation recesses 57a, 57b and the roller accommodation recess 58.

In this case, the housing body 50 according to the present embodiment is made of a hard resin member such as plastic, and includes a solid portion 501 made of the hard resin member in a region of the body-side installation surface 53e where the pair of wound portion accommodation recesses 57a, 57b and the roller accommodation recess 58 are not formed.

The pair of wound portion accommodation recesses 57a, 57b are bottomed grooves formed symmetrically on the left and right, and are each formed in a columnar shape in accordance with respective outer shapes of the wound portions 60a, 60b. Diameters of the wound portion accommodation recesses 57a, 57b are selected to be slightly larger than diameters of the wound portions 60a, 60b, thereby reducing a size of the housing body 50. A shaft core 61a is provided at a center of the bottom of each of the wound portion accommodation recesses 57a, 57b. In the wound portion accommodation recesses 57a, 57b, the wound portions 60a, 60b are rotatably provided on the respective shaft core 61a, and the wound portions 60a, 60b are accommodated in the wound portion accommodation recesses 57a, 57b.

In the roller accommodation recess 58, the drive roller 30a and the rotary encoder 30b are accommodated, and the pair of elongated plates 17a, 17b fed from the wound portions 60a, 60b through the insertion hole 59 are guided. The roller accommodation recess 58 according to the present embodiment is a bottomed groove, and an opening of the roller accommodation recess 58 has an elliptical shape continuously surrounding the outer peripheries of the drive roller 30a and the rotary encoder 30b. The roller accommodation recess 58 communicates with the opening 53c formed in the first surface 53a, allowing the pair of elongated plates 17a, 17b, which have passed between the drive roller 30a and the rotary encoder 30b, to pass through toward the opening 53c.

The pair of wound portions 60a, 60b spirally wind the elongated plates 17a, 17b and are engaged with each other by gear portions 62 formed on respective outer peripheries thereof, and rotation of the wound portion 60b causes the wound portion 60a to rotate.

Here, the pair of wound portions 60a, 60b are located on a second surface 53b side facing the first surface 53a on which the opening 53c of the housing body 50 is formed, and a plate separation portion where the elongated plates 17a, 17b are separated from the wound portions 60a, 60b is disposed at a position where the wound portions 60a, 60b face each other.

The elongated plates 17a, 17b wound around the wound portions 60a, 60b are pulled out from the plate separation portion of the wound portions 60a, 60b into the roller accommodation recess 58 described later formed in the housing body 50.

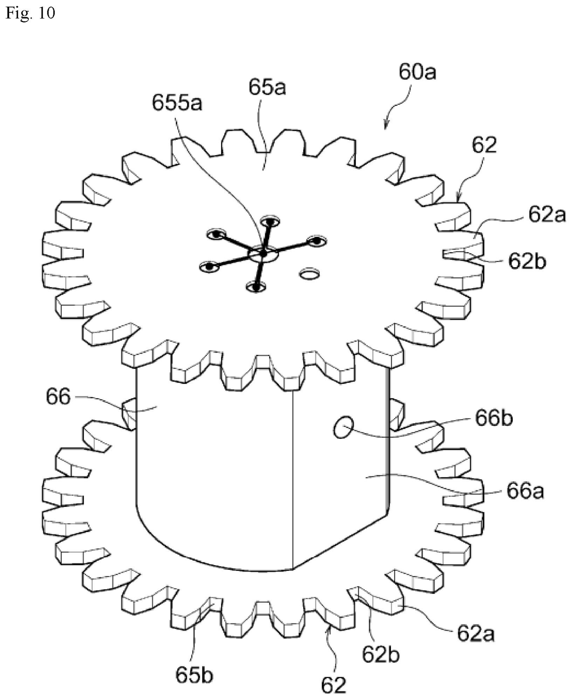

As illustrated in Fig. 10, the wound portions 60a, 60b each have a hole 655a at a center thereof, and the hole 655a is inserted through the shaft core 61a provided in the housing body 50, so that the wound portions 60a, 60b are rotatably provided in the housing body 50. Unlike the first embodiment described above, the wound portions 60a, 60b each do not include an elastic member such as a spiral spring therein, and are configured to wind the elongated plates 17a, 17b around the wound portions 60a, 60b by a driving force applied by the winding drive device 45.

The elongated plates 17a, 17b are each made up of an elongated strip-shaped metal plate, a strip-shaped resin plate, or the like, and may be made of, for example, aluminum or aluminum alloy having high rigidity. The protruding type linear actuator 40 according to the second embodiment winds the elongated plates 17a, 17b around the wound portions 60a, 60b by the driving force applied by the winding drive device 45, and therefore, the elongated plates 17a, 17b can be wound around the wound portions 60a, 60b even when the elongated plates 17a, 17b are strip-shaped metal plates having high rigidity, which are difficult to wind around the wound portions 60a, 60b by an elastic restoring force applied by an elastic member such as a spiral spring.

The elongated plates 17a, 17b extend along respective tangential directions of outer peripheries of the pair of wound portions 60a, 60b and abut against each other, and are sandwiched between the drive roller 30a and the rotary encoder 30b that are accommodated in the roller accommodation recess 58. The elongated plates 17a, 17b pass between the drive roller 30a and the rotary encoder 30b in an overlapped state, and the free end portions of the elongated plates 17a, 17b protrude toward the outside from the opening 53c formed in the first surface 53a of the housing body 50.

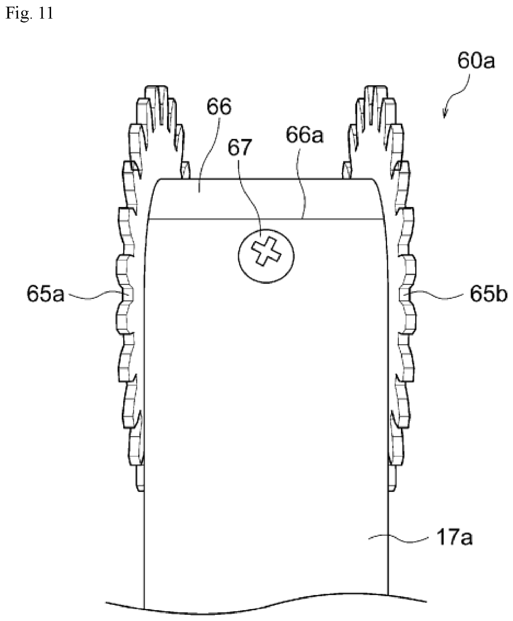

Next, a configuration of the wound portions 60a, 60b will be described. Since the wound portions 60a, 60b have the same configuration, the following description will focus on the wound portion 60a. As illustrated in Fig. 10, the wound portion 60a includes a pillar portion 66 and disk portions 65a, 65b provided at end portions of the pillar portion 66. The pillar portion 66 includes a flat portion 66a, and a fixing hole 66b is formed in the flat portion 66a. As illustrated in Fig. 11, the pillar portion 66 is positioned such that a through hole (not illustrated) formed in the elongated plate 17a overlaps the fixing hole 66b (Fig. 10) of the flat portion 66a, and a screw 67 inserted through the through hole of the elongated plate 17a is screwed into the fixing hole 66b of the flat portion 66a. In the wound portion 60a, the elongated plate 17a is fixed to the flat portion 66a by the screw 67 such that the screw 67 hardly protrudes, and the elongated plate 17a can be wound around the pillar portion 66 without being obstructed by the screw 67.

In the wound portion 60a, the elongated plate 17a whose end portion is fixed to the pillar portion 66 by the screw 67 is wound around an outer periphery of the pillar portion 66, and the elongated plate 17a is wound around the pillar portion 66 between the disk portions 65a, 65b arranged to face each other.

As illustrated in Fig. 10, a gear portion 62 is formed on an outer periphery of each of the disk portions 65a, 65b. The gear portion 62 has a configuration in which tooth portions 62a and tooth grooves 62b are alternately formed, and the tooth portion 62a of the wound portion 60a is engaged with the tooth groove 62b of the wound portion 60b, so that the pair of wound portions 60a, 60b can rotate in conjunction with each other.

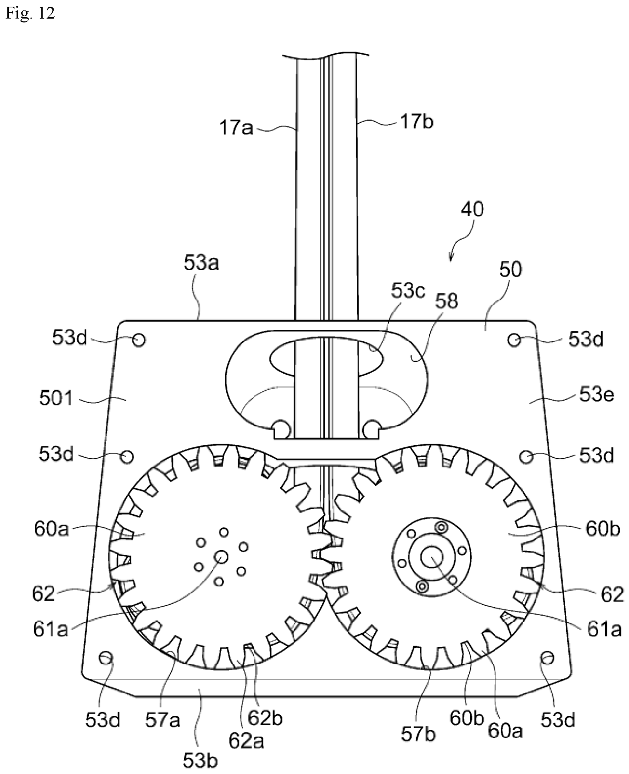

The protruding type linear actuator 40 according to the second embodiment is assembled as follows. First, as illustrated in Fig. 12, the housing body 50 is prepared in which the pair of wound portions 60a, 60b are provided in advance. Further, as illustrated in Fig. 13, the lid portion 51 is prepared in which the drive roller 30a, the plate drive device 44, the winding drive device 45, the rotary encoder 30b, and the measurement circuit 43 are provided in advance. As illustrated in Fig. 13, the drive roller 30a is coupled to an output shaft 71a of the plate drive device 44 penetrating a thickness of the lid portion 51, and the rotary encoder 30b is coupled to an output shaft 71b of the measurement circuit 43 penetrating the thickness of the lid portion 51.

Then, the lid portion 51 is disposed to cover the body-side installation surface 53e of the housing body 50 such that the drive roller 30a and the rotary encoder 30b, which are disposed on the lid-side installation surface 67e of the lid portion 51, are accommodated in the roller accommodation recess 58 of the housing body 50. At this time, the drive roller 30a and the rotary encoder 30b are accommodated in the roller accommodation recess 58 such that the pair of elongated plates 17a, 17b are sandwiched between the drive roller 30a and the rotary encoder 30b.

Next, a screw is inserted into the communication hole 67d of the lid portion 51 overlapping the screw hole 53d of the housing body 50 and is screwed into the screw hole 53d of the housing body 50, so that the lid portion 51 and the housing body 50 can be integrated. In this case, similarly to the first embodiment described above, the pair of elongated plates 17a, 17b can be sandwiched between the drive roller 30a and the rotary encoder 30b only by attaching the lid portion 51 to the body-side installation surface 53e of the housing body 50, the assemblability is improved, and the drive roller 30a and the rotary encoder 30b can be easily replaced at the time of disassembly.

In the protruding type linear actuator 40, when the elongated plates 17a, 17b such as strip-shaped metal plates having high rigidity are used, a strong force acts on the elongated plates 17a, 17b to straighten the elongated plates 17a, 17b. Therefore, if the wound portions 60a, 60b are to be kept stopped, it may be necessary to operate the winding drive device 45 to constantly apply a load to the wound portions 60a, 60b, thereby keeping the wound portions 60a, 60b stopped.

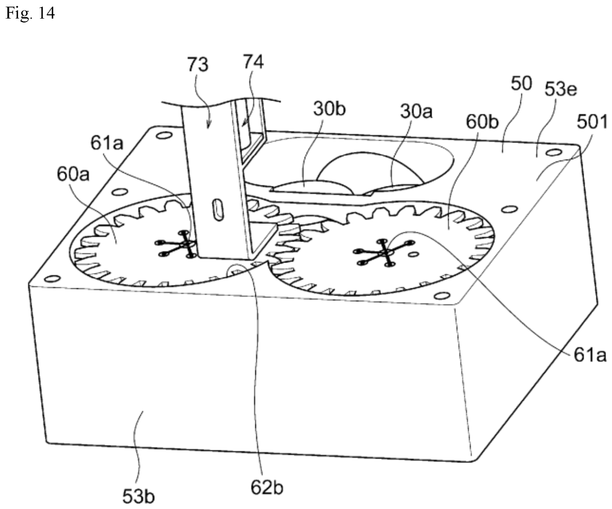

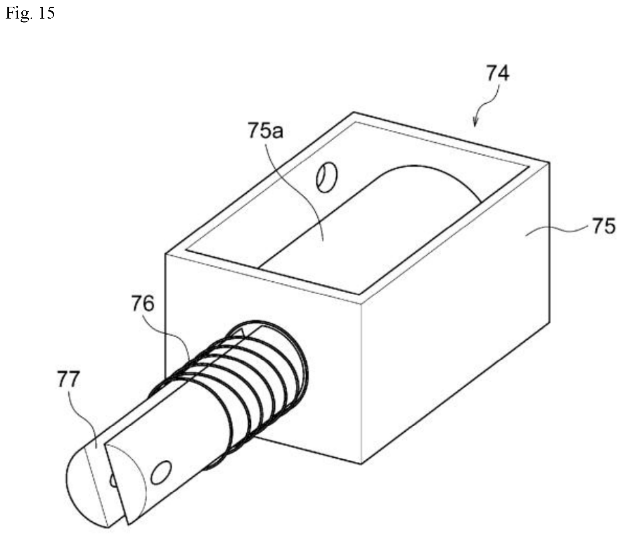

Therefore, when the elongated plates 17a, 17b having high rigidity are used, the stopper mechanism may be provided that maintains the wound portions 60a, 60b in a non-rotating state by inserting a rod-shaped stopper such as a metal rod into the tooth groove 62b of one of the pair of wound portions 60a, 60b. Fig. 14 is a schematic diagram illustrating an arrangement position of the stopper mechanism 74 with respect to the wound portions 60a, 60b. Fig. 15 is a schematic diagram illustrating a configuration of the stopper mechanism 74.

In this case, as illustrated in Fig. 14, the protruding type linear actuator 40 has a configuration in which a coupling fitting 73 is attached to the attachment portion 47 of the lid portion 51 (not illustrated) to provide the stopper mechanism 74. In Fig. 14, in order to describe the position of the stopper mechanism 74 relative to the wound portion 60a, the lid portion 51 is omitted. As a method of attaching the stopper mechanism 74 to the attachment portion 47, a known attachment method such as fitting the stopper mechanism 74 to the attachment portion 47 and screwing the stopper mechanism 74 with a screw may be applied.

The stopper mechanism 74 disengages a stopper 77 from the tooth groove 62b of the gear portion 62 when the pair of wound portions 60a, 60b are rotated, and inserts the stopper 77 into the tooth groove 62b when the pair of wound portions 60a, 60b are stopped. In this case, the stopper mechanism 74 includes a voltage generation portion 75a in a frame portion 75, and is configured such that, when a voltage from the voltage generation portion 75a is applied to a solenoid 76, the rod-shaped stopper 77 around which the solenoid 76 is wound can be caused to protrude by magnetism generated by applying the voltage. When the pair of wound portions 60a, 60b are stopped, the stopper mechanism 74 can apply a voltage to the solenoid 76, and cause the stopper 77 to protrude and be inserted into the tooth groove 62b, thereby physically maintaining the non-rotating state of the wound portions 60a, 60b.

### (2-2) <Operation and Effect>

According to the above-described configuration, since the protruding type linear actuator 40 according to the second embodiment can also accommodate the pair of wound portions 60a, 60b, the drive roller 30a, and the rotary encoder 30b inside the housing 42 to make them not exposed to the outside, for example, even when the protruding type linear actuator 40 is attached to the slider 8 of the arm robot 1, the wound portions 60a, 60b, the drive roller 30a, and the rotary encoder 30b do not come into contact with other portions such as the slider 8, and an attachment work can be performed without considering positions of the wound portions 60a, 60b, the drive roller 30a, and the rotary encoder 30b. Therefore, the operability can be improved as compared with the related art.

### (3) <Other Embodiments>

In the above-described embodiments, a case where the rotary encoder 30b is used as the rotatable roller has been described, but the present invention is not limited thereto. For example, the rotatable roller may be disposed to face the drive roller 30a and simply sandwich the pair of overlapped elongated plates 17a, 17b between the drive roller 30a and the rotatable roller.

In addition, in the above-described embodiments, a configuration in which the pressing element 18 is provided at the free end portions of the elongated plates 17a, 17b has been described, but the present invention is not limited thereto, and for example, an electronic device or the like may be provided at the free end portions of the elongated plates 17a, 17b.

The electronic device may be, for example, an electronic device that observes a CO₂ concentration in an surrounding environment and outputs a detection signal indicating a measured value of the CO₂ concentration based on information obtained from the observation, or any of other gas sensors, temperature sensors, humidity sensors, illuminance sensors, radiation sensors, proximity sensors, magnetic sensors, imaging sensors, air pressure sensors, acceleration sensors, noise sensors, or acoustic sensors.

In addition, for example, the protruding type linear actuators 10, 40 may has a configuration in which an object recognition device 13 such as an imaging device, a LIDAR, or a 3D scanner device is provided at the free end portions of the elongated plates 17a, 17b as the electronic device. In addition, the protruding type linear actuators 10, 40 may have a configuration in which a lighting device is provided at the free end portions of the elongated plates 17a, 17b.

Further, in the above-described embodiments, the protruding type linear actuators 10, 40 are each provided on the arm robot 1, but the present invention is not limited thereto, and the protruding type linear actuators 10, 40 may be installed in a portion of a self-propelled robot that autonomously travels, equipment, or the like. In addition, a hand robot including a gripping portion may be provided at the free end portions of the elongated plates 17a, 17b.

Further, the protruding type linear actuators 10, 40 may be provided on a screen device in which a screen is unfolded and folded. In this case, the protruding type linear actuators 10, 40 are installed, for example, in a winding mechanism of the screen device that can wind a screen sheet, and a screen support member that supports an end portion of the screen sheet is installed at free end portions of the pair of elongated plates 17a, 17b. The protruding type linear actuators 10, 40 can extend the pair of elongated plates 17a, 17b to pull up the screen sheet from the winding mechanism.

The protruding type linear actuators 10, 40 can be configured to move the pair of elongated plates 17a, 17b forward and backward to cause the screen support member provided at the free end portions of the elongated plates 17a, 17b to reciprocate linearly along the extension/retraction directions x1 and x2, thereby enabling the screen sheet to be unfolded and folded. For example, the protruding type linear actuators 10, 40 can use the screen sheet as a paper tension by being installed between adjacent desks or chairs, or can use the screen sheet as a sunshade or a blindfold by being installed in an opening of a building. In addition, the protruding type linear actuators 10, 40 can also be used as a screen device by, for example, projecting an image or a video from a projector onto the screen sheet.

Further, in the first embodiment described above, the plate drive device 12, the measurement circuit coupled to the rotary encoder 30b, and the object recognition device 13 are applied as the electronic devices disposed on the outer surface of the housing 11, and the wiring extending from the plate drive device 12, the measurement circuit, and the object recognition device 13 is inserted into the through hole 15a of the housing 11, but the present invention is not limited thereto, and various other electronic devices may be provided on the housing 11, and the wiring of the electronic devices may be inserted into the through hole 15a of the housing 11. The through hole 15a provided in the housing 11 according to the first embodiment described above may be provided in the housing 42 according to the second embodiment.

Further, in the housing 11 according to the first embodiment described above, the drive roller 30a and the rotary encoder 30b may be disposed within a region that exceeds the imaginary line L1 connecting the top portions of the outer peripheries of the pair of wound portions 25a, 25b. The configuration of the first embodiment and the configuration of the second embodiment may be combined, for example, the winding drive device 45 according to the second embodiment may be provided on the wound portion 25a.

The protruding type linear actuator according to each of the embodiments described above includes: a pair of wound portions arranged to face each other; a pair of elongated plates wound spirally around the pair of wound portions, respectively; a drive roller configured to abut against one surface of the pair of elongated plates to move the pair of elongated plates along a longitudinal direction of the elongated plates, the pair of elongated plates extending respectively from the pair of wound portions and being overlapped with each other; a rotatable roller disposed to face the drive roller and configured to sandwich the pair of overlapped elongated plates between the drive roller and the rotatable roller; and a housing configured to accommodate the pair of wound portions, the drive roller, and the rotatable roller. The elongated plates are pulled out from the pair of wound portions or wound around the pair of wound portions, causing the pair of elongated plates protruding from an opening of the housing to reciprocate linearly outside the housing.

The drive roller and the rotatable roller may be configured to press centers in a width direction of the pair of overlapped elongated plates. An example of configurations of the drive roller and the rotatable roller that press the center in the width direction of the pair of overlapped elongated plates will be described below.

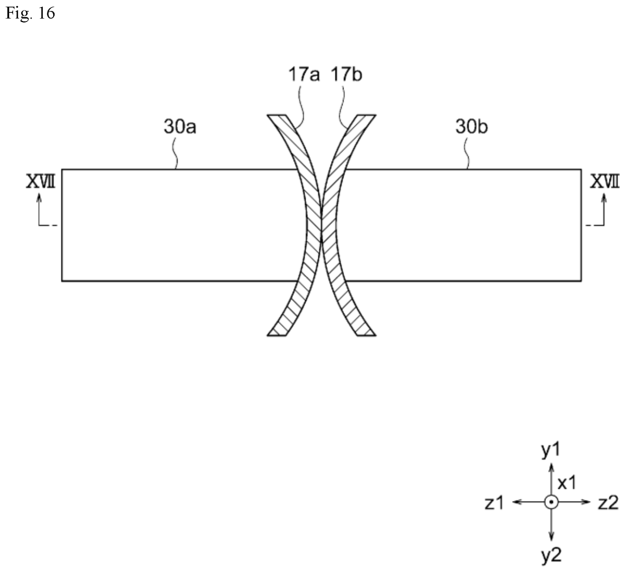

Fig. 16 is a partial cross-sectional view illustrating an example of configurations of the drive roller 30a and the rotary encoder 30b serving as the rotatable roller that press centers in the width directions y1 and y2 of the pair of overlapped elongated plates 17a, 17b. In Fig. 16, the drive roller 30a and the rotary encoder 30b are viewed from the extension/retraction direction x1 of the pair of elongated plates 17a, 17b. Fig. 16 illustrates a cross section of the free end portions of the pair of elongated plates 17a, 17b and the outer peripheral surfaces of the drive roller 30a and the rotary encoder 30b in a state where the pair of elongated plates 17a, 17b are sandwiched between the drive roller 30a and the rotary encoder 30b.

The pair of elongated plates 17a, 17b are each made up of a strip-shaped metal plate or a strip-shaped resin plate. The cross section of the free end portion of each of the elongated plates 17a, 17b has a shape curved in an arcuate shape. The elongated plates 17a, 17b each have the concave surface on the front surface and the convex portion on the back surface. The elongated plates 17a, 17b are overlapped with each other such that the concave surfaces on the front surfaces face outward and the convex portions on the back surfaces abut each other.

The drive roller 30a is formed in a columnar shape, and has an outer peripheral surface made of a soft resin member such as urethane. The rotary encoder 30b is formed in a columnar shape, and has an outer peripheral surface made of a soft resin member such as urethane. Portions of the outer peripheral surfaces of the drive roller 30a and the rotary encoder 30b, which abut against the concave surfaces on the front surfaces of the elongated plates 17a, 17b, are curved along the concave surfaces on the front surfaces of the elongated plates 17a, 17b.

Widths of the drive roller 30a and the rotary encoder 30b are selected to be smaller than a width of the pair of elongated plates 17a, 17b. In Fig. 16, a width direction of the drive roller 30a and the rotary encoder 30b is a direction along the width directions y1 and y2 of the pair of elongated plates 17a, 17b.

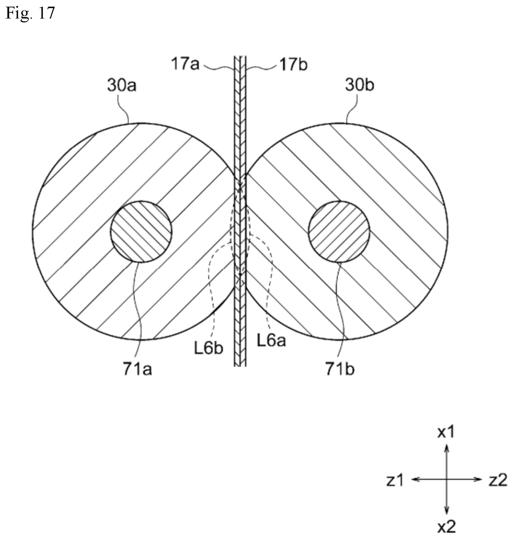

Fig. 17 is a cross-sectional view taken along line XVII-XVII in Fig. 16. In Fig. 17, similarly to the second embodiment described above, the drive roller 30a is coupled to the output shaft 71a of the plate drive device 44 (Fig. 13), and the rotary encoder 30b is coupled to the output shaft 71b of the measurement circuit 43 (Fig. 13). Similarly to the first embodiment described above, the drive roller 30a may be coupled to the output shaft of the plate drive device 12 (Figs. 1 and 2), and the rotary encoder 30b may be coupled to the output shaft of the measurement circuit (not illustrated).

The drive roller 30a and the rotary encoder 30b abut against the pair of elongated plates 17a, 17b along the extension/retraction directions x1 and x2 of the elongated plates 17a, 17b. The drive roller 30a and the rotary encoder 30b are in contact with each other in a state where the pair of elongated plates 17a, 17b are not sandwiched therebetween. In a state where the drive roller 30a and the rotary encoder 30b are not in contact with each other, the outer peripheral surface of the drive roller 30a is a cylindrical surface as indicated by a circular imaginary line L6a, and the outer peripheral surface of the rotary encoder 30b is a cylindrical surface as indicated by a circular imaginary line L6b. When the elongated plates 17a, 17b are sandwiched between the drive roller 30a and the rotary encoder 30b that are in contact with each other, the portions of the outer peripheral surfaces of the drive roller 30a and the rotary encoder 30b, which abut against the concave surfaces on the front surfaces of the elongated plates 17a, 17b, are deformed into a convex shape along the concave surfaces on the front surfaces of the elongated plates 17a, 17b.

By deforming the outer peripheral surfaces of the drive roller 30a and the rotary encoder 30b serving as the rotatable roller into the convex shape along the concave surfaces on the front surfaces of the pair of elongated plates 17a, 17b, the drive roller 30a and the rotary encoder 30b can press the centers in the width directions y1 and y2 of the pair of elongated plates 17a, 17b (Fig. 16) and more stably sandwich the pair of elongated plates 17a, 17b. The drive roller 30a and the rotary encoder 30b serving as the rotatable roller have widths smaller than the width of the pair of elongated plates 17a, 17b, and thus can further press the centers in the width directions y1 and y2 of the pair of elongated plates 17a and 17b.

The drive roller 30a and the rotary encoder 30b are not limited to being formed in a columnar shape, and may be formed in a barrel shape in which a center in the width direction of each of the drive roller 30a and the rotary encoder 30b bulges.

In the above-described embodiments, the configuration in which the drive roller 30a is rotated clockwise and counterclockwise by the driving force applied by the plate drive devices 12, 44 has been described, but the present invention is not limited thereto. For example, the drive roller 30a may be rotated clockwise and counterclockwise using a tool such as an impact wrench or a torque wrench. An example of a configuration of a protruding type linear actuator including a configuration for rotating the drive roller 30a clockwise and counterclockwise using a tool will be described below.

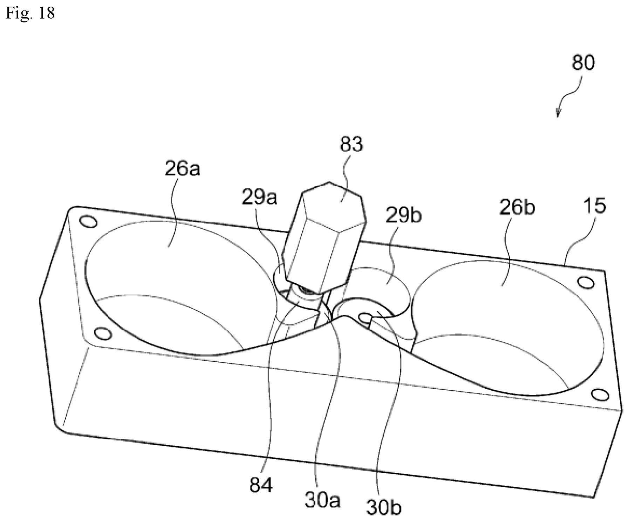

Fig. 18 is a schematic diagram illustrating an internal configuration of a protruding type linear actuator 80 according to a first modification, in which the lid portion is omitted.

As illustrated in Fig. 18, similarly to the first embodiment described above, in the protruding type linear actuator 80 according to the first modification, the drive roller 30a is accommodated in the drive roller accommodation recess 29a, and the rotary encoder 30b serving as the rotatable roller is accommodated in the rotatable roller accommodation recess 29b. The rotary encoder 30b is coupled to an output shaft of a measurement circuit (not illustrated) provided on the outer surface of the housing body 15, and is rotated clockwise and counterclockwise in conjunction with movement of elongated plates (not illustrated) moved by clockwise and counterclockwise rotation of the drive roller 30a. Similarly to the second embodiment described above, the drive roller 30a and the rotary encoder 30b may be accommodated in the roller accommodation recess 58.

The protruding type linear actuator 80 according to the first modification includes a tool coupling portion 83 that is provided on the drive roller 30a, protrudes to the outside of a housing, and to which a tool is detachably coupled. The tool is an impact wrench, a torque wrench, or the like, and includes a power tool and a manual tool. A shaft core (not illustrated) is provided at the bottom of the drive roller accommodation recess 29a, and the drive roller 30a is provided rotatably with respect to the shaft core. The tool coupling portion 83 is coupled to the drive roller 30a via a connection portion 84. That is, the drive roller 30a and the tool coupling portion 83 are rotatably provided on the shaft core. The tool coupling portion 83 and the connection portion 84 are made of a material having high rigidity such as a metal member or a hard resin member. The tool coupling portion 83 is formed in a hexagonal columnar shape. The connection portion 84 is formed in a columnar shape. The tool coupling portion 83 is not limited to being formed in a hexagonal columnar shape, and may be formed in various shapes in accordance with a tool to be used. The connection portion 84 is not limited to being formed in a columnar shape, and may be formed in any of various other shapes such as a polygonal prism shape or an elliptical cylinder shape. The protruding type linear actuator 80 is not limited to a configuration in which the drive roller 30a and the tool coupling portion 83 are rotatably provided on the shaft core, and may be a configuration in which the shaft core is rotatably provided at the bottom of the drive roller accommodation recess 29a, and the drive roller 30a and the tool coupling portion 83 are coupled to the shaft core.

The wound portions 25a, 25b are accommodated in the pair of wound portion accommodation recesses 26a, 26b (Fig. 3). The lid portion is fixed to the housing body 15 to form the housing. The tool coupling portion 83 protrudes to the outside of the housing through a through hole formed in the lid portion. The pair of wound portions 25a, 25b, the drive roller 30a, and the rotary encoder 30b are accommodated inside the housing and are not exposed to the outside. The tool such as the impact wrench is coupled to the tool coupling portion 83 protruding to the outside of the housing. The drive roller 30a is rotated clockwise and counterclockwise by the impact wrench serving as the tool coupled to the tool coupling portion 83.

The protruding type linear actuator 80 according to the first modification includes the pair of wound portions 25a, 25b, the pair of elongated plates 17a, 17b, the drive roller 30a, the rotary encoder 30b serving as the rotatable roller, the housing, and the tool coupling portion 83. The housing accommodates the pair of wound portions 25a, 25b, the drive roller 30a, and the rotary encoder 30b serving as the rotatable roller.

Since the protruding type linear actuator 80 according to the first modification can accommodate the pair of wound portions 25a, 25b, the drive roller 30a, and the rotary encoder 30b inside the housing to make them not exposed to the outside, for example, even when the protruding type linear actuator 80 is attached to the slider 8 of the arm robot 1, the wound portions 25a, 25b, the drive roller 30a, and the rotary encoder 30b do not come into contact with other portions such as the slider 8, and an attachment work can be performed without considering positions of the wound portions 25a, 25b, the drive roller 30a, and the rotary encoder 30b. Therefore, the operability can be improved as compared with the related art.

In the second embodiment described above, the configuration in which the gear portions 62 are provided on the outer periphery of each of the pair of wound portions 60a, 60b, but the present invention is not limited thereto, and gear portions may be provided on each of outer peripheries of the drive roller and the rotatable roller. An example of a configuration of a protruding type linear actuator in which the gear portions are provided on each of the outer peripheries of the drive roller and the rotatable roller will be described below.

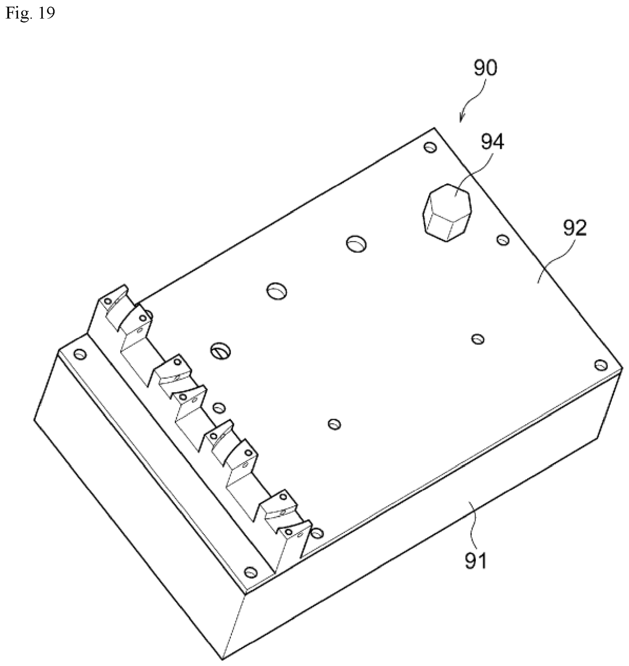

Fig. 19 is a schematic diagram illustrating a configuration of a protruding type linear actuator 90 according to a second modification, in which the pair of elongated plates and the pressing element are omitted.

The protruding type linear actuator 90 according to the second modification includes a rectangular housing made of a hard resin member such as plastic. The housing includes a box-shaped housing body 91 and a lid portion 92 that covers an opening region of the housing body 91. An outer surface of the housing is provided with a tool coupling portion 94 described later, a measurement circuit (not illustrated) coupled to a rotary encoder provided inside the housing, a winding drive device (not illustrated) including an output shaft coupled to a rotation axis of a wound portion provided inside the housing, an attachment portion (not illustrated) on which a stopper mechanism (not illustrated) is installed, and the like.

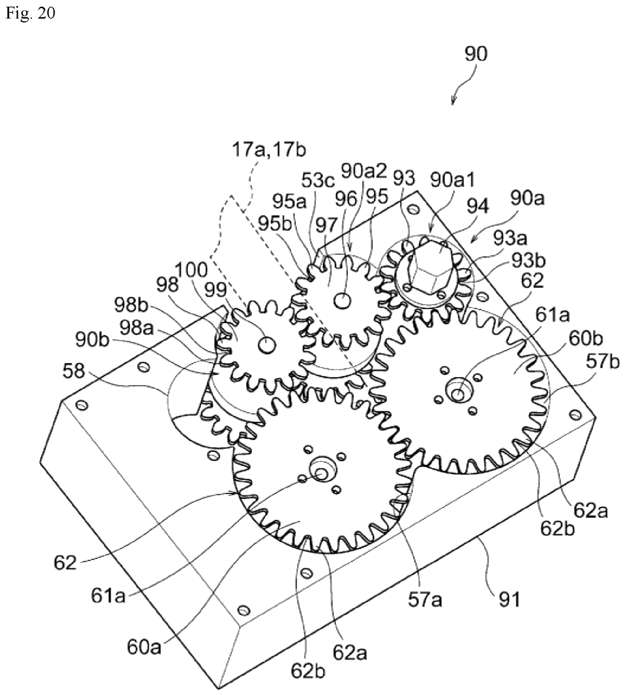

Fig. 20 is a schematic diagram illustrating an internal configuration of the protruding type linear actuator 90, in which the lid portion 92 illustrated in Fig. 19 is omitted. Fig. 20 illustrates, as an example, a configuration in which a rotary encoder 90b abuts against one surface of the elongated plate 17a fed from the wound portion 60a, and a drive roller 90a abuts against one surface of the elongated plate 17b fed from the wound portion 60b, similarly to the second embodiment described above. In the housing body 91, a screw hole is formed at each of four corners of a body-side installation surface on which the lid portion 92 (Fig. 19) is installed. In the protruding type linear actuator 90, communication holes formed at four corners of the lid portion 92 are positioned in the respective screw holes formed at the four corners of the body-side installation surface of the housing body 91, and screws are screwed into the communication holes of the lid portion 92 and the screw holes of the housing body 91, whereby the housing body 91 and the lid portion 92 are integrated (Fig. 19), the communication holes and the screw holes being overlapped with each other, respectively.

The body-side installation surface of the housing body 91 has a quadrilateral outer shape in Fig. 20, but may have various shapes in accordance with, for example, the outer peripheral shapes of the pair of wound portions 60a, 60b arranged side by side, the drive roller 90a, and the rotary encoder 90b. In this case, in the lid portion 92 (Fig. 19), a lid-side installation surface installed on the body-side installation surface of the housing body 91 may have a shape in accordance with the shape of the body-side installation surface.

The pair of wound portions 60a, 60b, the drive roller 90a, and the rotary encoder 90b serving as the rotatable roller are accommodated inside the housing body 91. In this case, the pair of wound portion accommodation recesses 57a, 57b, which accommodate the pair of wound portions 60a, 60b, and the roller accommodation recess 58, which accommodates the drive roller 90a and the rotary encoder 90b, are formed on the body-side installation surface of the housing body 91. The wound portion accommodation recesses 57a, 57b communicate with the roller accommodation recess 58.

The housing body 91 is made of a hard resin member such as plastic, and includes a solid portion made of the hard resin member in a region of the body-side installation surface where the pair of wound portion accommodation recesses 57a, 57b and the roller accommodation recess 58 are not formed.

The pair of wound portion accommodation recesses 57a, 57b are bottomed grooves formed symmetrically on the left and right, and are each formed in a columnar shape in accordance with respective outer shapes of the wound portions 60a, 60b. Diameters of the wound portion accommodation recesses 57a, 57b are selected to be slightly larger than diameters of the wound portions 60a, 60b, thereby reducing a size of the housing body 91.

In the roller accommodation recess 58, the drive roller 90a and the rotary encoder 90b are accommodated, and the pair of elongated plates 17a, 17b fed from the wound portions 60a, 60b are guided. The roller accommodation recess 58 is a bottomed groove, and an opening of the roller accommodation recess 58 has a shape of four circles connected together. The roller accommodation recess 58 communicates with the opening 53c formed in a first surface, allowing the pair of elongated plates 17a, 17b, which have passed between the drive roller 90a and the rotary encoder 90b, to pass through toward the opening 53c. The opening of the roller accommodation recess 58 is not limited to having the shape of four circles connected together, and may have any shape as long as a space for accommodating the drive roller 90a and the rotary encoder 90b is secured.

The pair of wound portions 60a, 60b each includes the gear portions 62 formed on an outer periphery thereof and are arranged to face each other such that the gear portions 62 are engaged with each other. The gear portion 62 has a configuration in which the tooth portions 62a and the tooth grooves 62b are alternately formed, and the tooth groove 62b of the wound portion 60b and the tooth portion 62a of the wound portion 60a are engaged with each other, so that the pair of wound portions 60a, 60b can rotate in conjunction with each other. The pair of wound portions 60a, 60b are engaged with each other by the gear portions 62 formed on respective outer peripheries thereof, and rotation of the wound portion 60b causes the wound portion 60a to rotate.

The pair of elongated plates 17a, 17b are wound spirally around the pair of wound portions 60a, 60b. The elongated plates 17a, 17b are each made up of a strip-shaped metal plate or a strip-shaped resin plate, and may be made of, for example, aluminum or aluminum alloy having high rigidity. The protruding type linear actuator 90 winds the elongated plates 17a, 17b around the wound portions 60a, 60b by a driving force applied by the winding drive device, and therefore, the elongated plates 17a, 17b can be wound around the wound portions 60a, 60b even when the elongated plates 17a, 17b are strip-shaped metal plates having high rigidity, which are difficult to wind around the wound portions 60a, 60b by an elastic restoring force applied by an elastic member such as a spiral spring.

The elongated plates 17a, 17b extend along the respective tangential directions of the outer peripheries of the pair of wound portions 60a, 60b and abut against each other, and are sandwiched between the drive roller 90a and the rotary encoder 90b that are accommodated in the roller accommodation recess 58. The elongated plates 17a, 17b pass between the drive roller 90a and the rotary encoder 90b in an overlapped state, and the free end portions of the elongated plates 17a, 17b protrude toward the outside from the opening 53c formed in the first surface of the housing body 91.

Next, a configuration of the drive roller 90a will be described. The drive roller 90a includes a drive gear roller 90a1 and a driven gear roller 90a2.

The drive gear roller 90a1 is configured to engage with the gear portions 62 of at least one of the pair of wound portions 60a, 60b to rotate the pair of wound portions 60a, 60b. In this case, the drive gear roller 90a1 is engaged with the gear portions 62 of the wound portion 60b.

Gear portions 93 are formed on an outer periphery of the drive gear roller 90a1. Specifically, a shaft core (not illustrated) is rotatably provided at the bottom of the roller accommodation recess 58, and the gear portion 93 is formed on each of outer peripheries of disk portions (not illustrated) provided at respective end portions of the shaft core. The gear portion 93 is accommodated inside the housing. The gear portion 93 has a configuration in which tooth portions 93a and tooth grooves 93b are alternately formed. The disk portions are coupled to one end portion and the other end portion of the shaft core, respectively. The one end portion of the shaft core is an end portion on a bottom side of the roller accommodation recess 58, and the other end portion of the shaft core is an end portion on a lid portion 92 (Fig. 19) side. The shaft core is formed in a columnar shape. The shaft core, the disk portion, and the gear portion 93 are made of a material having high rigidity such as a metal member or a hard resin member. The drive gear roller 90a1 is disposed such that a rotation axis is parallel to rotation axes of the wound portions 60a, 60b, and a circumferential direction is the same as a circumferential direction of the pair of wound portions 60a, 60b. The shaft core is not limited to being formed in a columnar shape, and may be formed in any of various other shapes such as a polygonal prism shape or an elliptical cylinder shape.

The drive gear roller 90a1 is provided with the tool coupling portion 94 that protrudes to the outside of the housing and to which a tool is detachably coupled. That is, the protruding type linear actuator 90 according to the second modification includes the tool coupling portion 94 that is provided on the drive gear roller 90a1, protrudes to the outside of the housing, and to which a tool is detachably coupled. The tool coupling portion 94 is provided on the other end portion side of the shaft core, that is, on the lid portion 92 (Fig. 19) side. The tool coupling portion 94 is coupled to the shaft core or the disk portion. The tool coupling portion 94 is made of a material having high rigidity such as a metal member or a hard resin member. The tool coupling portion 94 is formed in a hexagonal columnar shape. The tool coupling portion 94 is not limited to being formed in a hexagonal columnar shape, and may be formed in various shapes in accordance with a tool to be used.

A tool is coupled to the tool coupling portion 94, and the drive gear roller 90a1 is rotated clockwise and counterclockwise by the tool. The tooth portion 93a of the drive gear roller 90a1 and the tooth groove 62b of the wound portion 60b are engaged with each other, so that the drive gear roller 90a1 and the wound portion 60b can rotate in conjunction with each other. The tooth portion 62a of the wound portion 60b and the tooth groove 62b of the wound portion 60a are engaged with each other, so that the pair of wound portions 60a, 60b can rotate in conjunction with each other.

The driven gear roller 90a2 is configured to engage with the drive gear roller 90a1 and abut against one surface of the pair of elongated plates 17a, 17b to move the pair of elongated plates 17a, 17b along the longitudinal direction of the elongated plates 17a, 17b, the pair of elongated plates 17a, 17b extending from the pair of wound portions 60a, 60b and being overlapped with each other. The driven gear roller 90a2 is formed in a columnar shape, and has an outer peripheral surface made of a soft resin member such as urethane.

Gear portions 95 are formed on an outer periphery of the driven gear roller 90a2. Specifically, a shaft core 96 is provided at the bottom of the roller accommodation recess 58, disk portions 97 are rotatably provided at one end portion and the other end portion of the shaft core 96, respectively, and the gear portion 95 is formed on each of outer peripheries of the disk portions 97. The gear portion 95 is accommodated inside the housing. The gear portion 95 has a configuration in which tooth portions 95a and tooth grooves 95b are alternately formed. The one end portion of the shaft core 96 is an end portion on the bottom side of the roller accommodation recess 58, and the other end portion of the shaft core 96 is an end portion on the lid portion 92 (Fig. 19) side. The shaft core 96 is formed in a columnar shape. The shaft core 96, the disk portions 97, and the gear portion 95 are made of a material having high rigidity such as a metal member or a hard resin member. The driven gear roller 90a2 is disposed such that a rotation axis is parallel to the rotation axes of the pair of wound portions 60a, 60b, and a circumferential direction is the same as the circumferential direction of the pair of wound portions 60a, 60b. The shaft core 96 is not limited to being formed in a columnar shape, and may be formed in any of various other shapes such as a polygonal prism shape or an elliptical cylinder shape.

The tooth portion 95a of the driven gear roller 90a2 and the tooth groove 93b of the drive gear roller 90a1 are engaged with each other, so that the driven gear roller 90a2 and the drive gear roller 90a1 can rotate in conjunction with each other.

Next, a configuration of the rotary encoder 90b will be described. The rotary encoder 90b is coupled to an output shaft of the measurement circuit (not illustrated) provided on an outer surface of the housing body 91, and is rotated clockwise and counterclockwise in conjunction with movement of the elongated plates 17a, 17b moved by clockwise and counterclockwise rotation of the drive roller 30a.

The rotary encoder 90b is accommodated inside the housing, is disposed to face the driven gear roller 90a2 of the drive roller 90a, and is configured to sandwich the pair of overlapped elongated plates 17a, 17b between the driven gear roller 90a2 of the drive roller 90a and the rotary encoder 90b. In other words, the rotary encoder 90b is configured to engage with the driven gear roller 90a2 and sandwich the pair of overlapped elongated plates 17a, 17b between the driven gear roller 90a2 and the rotary encoder 90b. The rotary encoder 90b corresponds to the rotatable roller or a rotatable gear roller of the present invention. The rotary encoder 90b is formed in a columnar shape, and an outer peripheral surface thereof is formed of a soft resin member such as urethane.

Gear portions 98 are formed on an outer periphery of the rotary encoder 90b. Specifically, a shaft core 99 is provided at the bottom of the roller accommodation recess 58, disk portions 100 are rotatably provided at one end portion and the other end portion of the shaft core 99, respectively, and the gear portion 98 is formed on each of outer peripheries of the disk portions 100. The gear portion 98 is accommodated inside the housing. The gear portion 98 has a configuration in which tooth portions 98a and tooth grooves 98b are alternately formed. The one end portion of the shaft core 99 is an end portion on the bottom side of the roller accommodation recess 58, and the other end portion of the shaft core 99 is an end portion on the lid portion 92 (Fig. 19) side. The shaft core 99 is formed in a columnar shape. The shaft core 99, the disk portions 100, and the gear portion 98 are made of a material having high rigidity such as a metal member or a hard resin member. The rotary encoder 90b is disposed such that a rotation axis is parallel to the rotation axes of the pair of wound portions 60a, 60b, and a circumferential direction is the same as the circumferential direction of the pair of wound portions 60a, 60b. The shaft core 99 is not limited to being formed in a columnar shape, and may be formed in any of various other shapes such as a polygonal prism shape or an elliptical cylinder shape.

The tooth portion 98a of the rotary encoder 90b and the tooth groove 95b of the driven gear roller 90a2 of the drive roller 90a are engaged with each other, so that the rotary encoder 90b and the driven gear roller 90a2 can rotate in conjunction with each other.

Assuming that the gear portion 93 of the drive gear roller 90a1 is a first gear portion, the gear portion 95 of the driven gear roller 90a2 is a second gear portion, the gear portion 98 of the rotary encoder 90b is a third gear portion, the gear portion 62 of the wound portion 60b is a fourth gear portion, and the gear portion 62 of the wound portion 60a is a fifth gear portion, the gear portion 93 serving as the first gear portion is engaged with the gear portion 95 serving as the second gear portion and the gear portion 62 of the wound portion 60b serving as the fourth gear portion, the gear portion 95 serving as the second gear portion is engaged with the gear portion 98 serving as the third gear portion, and the gear portion 62 of the wound portion 60b serving as the fourth gear portion is engaged with the gear portion 62 of the wound portion 60a serving as the fifth gear portion. In the protruding type linear actuator 90 according to the second modification, the tool coupling portion 94 protrudes to the outside of the housing through a through hole formed in the lid portion 92 (Fig. 19). A tool such as an impact wrench is coupled to the tool coupling portion 94 protruding to the outside of the housing. The drive roller 90a (the drive gear roller 90a1 and the driven gear roller 90a2), the rotary encoder 90b serving as the rotatable roller or the rotatable gear roller, and the pair of wound portions 60a, 60b are rotated clockwise and counterclockwise in conjunction with each other by the impact wrench serving as the tool coupled to the tool coupling portion 94. In the protruding type linear actuator 90 according to the second modification, the elongated plates 17a, 17b are pulled out from the pair of wound portions 60a, 60b or wound around the pair of wound portions 60a, 60b, causing the pair of elongated plates 17a, 17b protruding from the opening 53c to reciprocate linearly outside the housing.

The protruding type linear actuator 90 according to the second modification includes the pair of wound portions 60a, 60b, the pair of elongated plates 17a, 17b, the drive roller 90a (the drive gear roller 90a1 and the driven gear roller 90a2), the rotary encoder 90b serving as the rotatable roller or the rotatable gear roller, and the housing. The housing of the protruding type linear actuator 90 according to the second modification accommodates the pair of wound portions 60a, 60b, the drive roller 90a (the drive gear roller 90a1 and the driven gear roller 90a2), and the rotary encoder 90b serving as the rotatable roller or the rotatable gear roller.

Since the protruding type linear actuator 90 according to the second modification can accommodate the pair of wound portions 60a, 60b, the drive roller 90a, and the rotary encoder 90b inside the housing to make them not exposed to the outside, for example, even when the protruding type linear actuator 90 is attached to the slider 8 of the arm robot 1, the wound portions 60a, 60b, the drive roller 90a, and the rotary encoder 90b do not come into contact with other portions such as the slider 8, and an attachment work can be performed without considering positions of the wound portions 60a, 60b, the drive roller 90a, and the rotary encoder 90b. Therefore, the operability can be improved as compared with the related art.

The gear portion 93 of the drive gear roller 90a1 of the drive roller 90a may be engaged with the gear portion 62 of the wound portion 60a by reversing arrangement positions of the drive roller 90a (the drive gear roller 90a1 and the driven gear roller 90a2) and the rotary encoder 90b. The measurement circuit (not illustrated) is not limited to being coupled to the rotary encoder 90b, and may be coupled to the drive gear roller 90a1 or the driven gear roller 90a2. The tool coupling portion 94 is not limited to being provided on the drive gear roller 90a1, and may be provided on the driven gear roller 90a2 or the rotary encoder 90b. The protruding type linear actuator 90 is not limited to a configuration in which the shaft core is rotatably provided at the bottom of the roller accommodation recess 58, and the disk portions, the gear portions 93, and the tool coupling portion 94 are coupled to the shaft core, and may be a configuration in which the shaft core is provided at the bottom of the roller accommodation recess 58 so as not to rotate, and the disk portions, the gear portions 93, and the tool coupling portion 94 are rotatably provided with respect to the shaft core.

The pair of elongated plates are sandwiched between the rotatable roller and the drive roller in the embodiments described above, but the present invention is not limited thereto, and the rotatable roller may not be used. An example of a configuration of a protruding type linear actuator that does not use the rotatable roller will be described below.

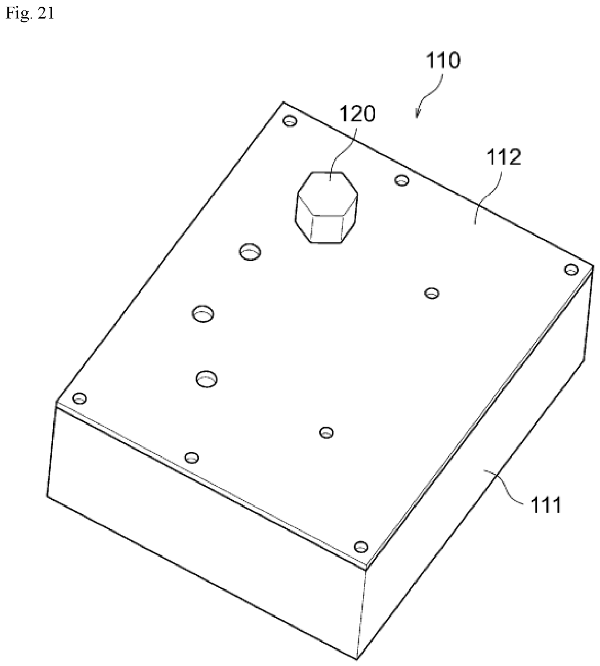

Fig. 21 is a schematic diagram illustrating a configuration of a protruding type linear actuator 110 according to a third modification, in which the pair of elongated plates and the pressing element are omitted.

The protruding type linear actuator 110 according to the third modification includes a rectangular housing made of a hard resin member such as plastic. The housing includes a box-shaped housing body 111 and a lid portion 112 that covers an opening region of the housing body 111. An outer surface of the housing is provided with a tool coupling portion 120 described later, a winding drive device (not illustrated) including an output shaft coupled to a rotation axis of a wound portion provided inside the housing, an attachment portion (not illustrated) on which a stopper mechanism (not illustrated) is installed, and the like.

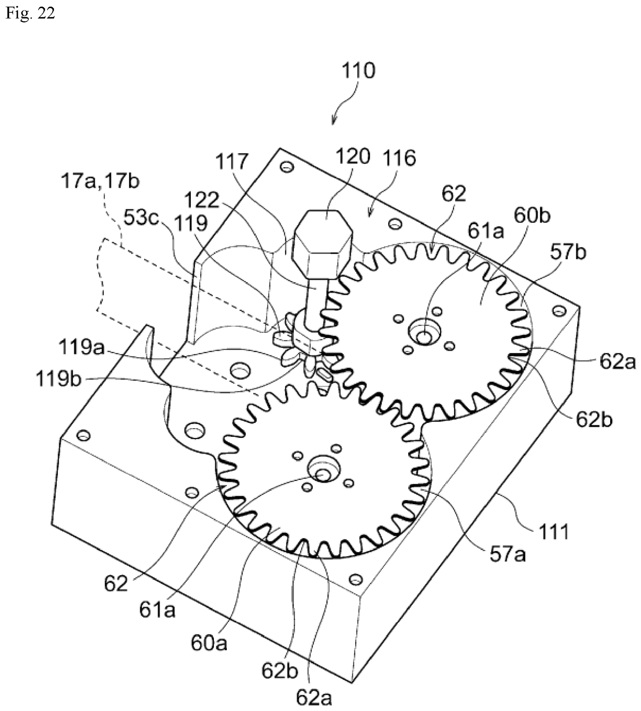

Fig. 22 is a schematic diagram illustrating an internal configuration of the protruding type linear actuator 110, in which the lid portion 112 illustrated in Fig. 21 is omitted. In the housing body 111, a screw hole is formed at each of four corners of a body-side installation surface on which the lid portion 112 (Fig. 21) is installed. In the protruding type linear actuator 110, communication holes formed at four corners of the lid portion 112 are positioned in the respective screw holes formed at the four corners of the body-side installation surface of the housing body 111, and screws are screwed into the communication holes of the lid portion 112 and the screw holes of the housing body 111, whereby the housing body 111 and the lid portion 112 are integrated (Fig. 21), the communication holes and the screw holes being overlapped with each other, respectively.

The body-side installation surface of the housing body 111 has a quadrilateral outer shape in Fig. 22, but may have various shapes in accordance with, for example, outer peripheral shapes of the pair of wound portions 60a, 60b arranged side by side and a drive gear roller 116. In this case, in the lid portion 112 (Fig. 21), a lid-side installation surface installed on the body-side installation surface of the housing body 111 may have a shape in accordance with the shape of the body-side installation surface.

The pair of wound portions 60a, 60b and the drive gear roller 116 are accommodated inside the housing body 111. In this case, the pair of wound portion accommodation recesses 57a, 57b, which accommodate the pair of wound portions 60a, 60b, and a drive gear accommodation recess 117, which accommodates the drive gear roller 116, are formed on the body-side installation surface of the housing body 111. The wound portion accommodation recesses 57a, 57b communicate with the drive gear accommodation recess 117.

The housing body 111 is made of a hard resin member such as plastic, and includes a solid portion made of the hard resin member in a region of the body-side installation surface where the pair of wound portion accommodation recesses 57a, 57b and the drive gear accommodation recess 117 are not formed.

The pair of wound portion accommodation recesses 57a, 57b are bottomed grooves formed symmetrically on the left and right, and are each formed in a columnar shape in accordance with respective outer shapes of the wound portions 60a, 60b. Diameters of the wound portion accommodation recesses 57a, 57b are selected to be slightly larger than diameters of the wound portions 60a, 60b, thereby reducing a size of the housing body 111.

In the drive gear accommodation recess 117, the drive gear roller 116 is accommodated, and the pair of elongated plates 17a, 17b fed from the wound portions 60a, 60b are guided. The drive gear accommodation recess 117 is a bottomed groove, and an opening of the drive gear accommodation recess 117 has a shape of four circles connected together. The drive gear accommodation recess 117 communicates with the opening 53c formed in the first surface, allowing the pair of elongated plates 17a, 17b fed from the wound portions 60a, 60b to pass through toward the opening 53c. The opening of the drive gear accommodation recess 117 is not limited to having the shape of four circles connected together, and may have any shape as long as a space for accommodating the drive gear roller 116 is secured.

The pair of wound portions 60a, 60b each includes the gear portions 62 formed on an outer periphery thereof and are arranged to face each other such that the gear portions 62 are engaged with each other. The gear portion 62 has a configuration in which the tooth portions 62a and the tooth grooves 62b are alternately formed, and the tooth groove 62b of the wound portion 60b and the tooth portion 62a of the wound portion 60a are engaged with each other, so that the pair of wound portions 60a, 60b can rotate in conjunction with each other. The pair of wound portions 60a, 60b are engaged with each other by the gear portions 62 formed on respective outer peripheries thereof, and rotation of the wound portion 60b causes the wound portion 60a to rotate.

The pair of elongated plates 17a, 17b are wound spirally around the pair of wound portions 60a, 60b. The elongated plates 17a, 17b are each made up of a strip-shaped metal plate or a strip-shaped resin plate, and may be made of, for example, aluminum or aluminum alloy having high rigidity. The protruding type linear actuator 110 winds the elongated plates 17a, 17b around the wound portions 60a, 60b by a driving force applied by the winding drive device, and therefore, the elongated plates 17a, 17b can be wound around the wound portions 60a, 60b even when the elongated plates 17a, 17b are strip-shaped metal plates having high rigidity, which are difficult to wind around the wound portions 60a, 60b by an elastic restoring force applied by an elastic member such as a spiral spring.

The elongated plates 17a, 17b extend along the respective tangential directions of the outer peripheries of the pair of wound portions 60a, 60b and abut against each other, and pass through the drive gear accommodation recess 117 in an overlapped state, and the free end portions of the elongated plates 17a, 17b protrude toward the outside from the opening 53c formed in the first surface of the housing body 111.

Next, a configuration of the drive gear roller 116 will be described. The drive gear roller 116 is configured to engage with the gear portion 62 of at least one of the pair of wound portions 60a, 60b to rotate the pair of wound portions 60a, 60b. In this case, the drive gear roller 116 is engaged with the gear portion 62 of the wound portion 60b.

A gear portion 119 is formed on an outer periphery of the drive gear roller 116. Specifically, a shaft core 122 is rotatably provided at the bottom of the drive gear accommodation recess 117, and the gear portion 119 is formed on an outer periphery of a disk portion (not illustrated) provided at at least one of end portions of the shaft core 122. In this case, the gear portion 119 is formed on the outer periphery of the disk portion provided at one end portion of the shaft core 122. The one end portion of the shaft core 122 is an end portion on a bottom side of the drive gear accommodation recess 117, and the other end portion of the shaft core 122 is an end portion on the lid portion 112 (Fig. 21) side. The gear portion 119 is accommodated inside the housing. The gear portion 119 has a configuration in which tooth portions 119a and tooth grooves 119b are alternately formed. The disk portion is coupled to the one end portion of the shaft core 122. The shaft core 122 is formed in a columnar shape. The shaft core 122, the disk portion, and the gear portion 119 are made of a material having high rigidity such as a metal member or a hard resin member. The drive gear roller 116 is disposed such that a rotation axis is parallel to the rotation axes of the wound portions 60a, 60b, and a circumferential direction is the same as the circumferential direction of the pair of wound portions 60a, 60b. The shaft core 122 is not limited to being formed in a columnar shape, and may be formed in any of various other shapes such as a polygonal prism shape or an elliptical cylinder shape.

The drive gear roller 116 is provided with the tool coupling portion 120 that protrudes to the outside of the housing and to which a tool is detachably coupled. That is, the protruding type linear actuator 110 according to the third modification includes the tool coupling portion 120 that is provided on the drive gear roller 116, protrudes to the outside of the housing, and to which a tool is detachably coupled. The tool coupling portion 120 is provided on the other end portion side of the shaft core 122, that is, on the lid portion 112 (Fig. 21) side. The tool coupling portion 120 is coupled to the other end portion of the shaft core 122. The tool coupling portion 120 is made of a material having high rigidity such as a metal member or a hard resin member. The tool coupling portion 120 is formed in a hexagonal columnar shape. The tool coupling portion 120 is not limited to being formed in a hexagonal columnar shape, and may be formed in various shapes in accordance with a tool to be used.

A tool is coupled to the tool coupling portion 120, and the drive gear roller 116 is rotated clockwise and counterclockwise by the tool. The tooth portion 119a of the drive gear roller 116 and the tooth groove 62b of the wound portion 60b are engaged with each other, so that the drive gear roller 116 and the wound portion 60b can rotate in conjunction with each other. The tooth groove 62b of the wound portion 60b and the tooth portion 62a of the wound portion 60a are engaged with each other, so that the pair of wound portions 60a, 60b can rotate in conjunction with each other.

Assuming that the gear portion 119 of the drive gear roller 116 is a first gear portion, the gear portion 62 of the wound portion 60b is a second gear portion, and the gear portion 62 of the wound portion 60a is a third gear portion, the gear portion 119 serving as the first gear portion is engaged with the gear portion 62 of the wound portion 60b serving as the second gear portion, and the gear portion 62 of the wound portion 60b serving as the second gear portion is engaged with the gear portion 62 of the wound portion 60a serving as the third gear portion. In the protruding type linear actuator 110 according to the third modification, the tool coupling portion 120 protrudes to the outside of the housing through a through hole formed in the lid portion 112 (Fig. 21). A tool such as an impact wrench is coupled to the tool coupling portion 120 protruding to the outside of the housing. The drive gear roller 116 and the pair of wound portions 60a, 60b are rotated clockwise and counterclockwise in conjunction with each other by the impact wrench serving as the tool coupled to the tool coupling portion 120. In the protruding type linear actuator 110 according to the third modification, in a state where the elongated plates 17a, 17b extending from the pair of wound portions 60a, 60b are overlapped with each other, the elongated plates 17a, 17b are pulled out from the pair of wound portions 60a, 60b or wound around the pair of wound portions 60a, 60b, causing the pair of elongated plates 17a, 17b protruding from the opening 53c to reciprocate linearly outside the housing.

The protruding type linear actuator 110 according to the third modification includes the pair of wound portions 60a, 60b, the pair of elongated plates 17a, 17b, the drive gear roller 116, and the housing. The housing of the protruding type linear actuator 110 according to the third modification accommodates the pair of wound portions 60a, 60b and the drive gear roller 116.

Since the protruding type linear actuator 110 according to the third modification can accommodate the pair of wound portions 60a, 60b and the drive gear roller 116 inside the housing to make them not exposed to the outside, for example, even when the protruding type linear actuator 110 is attached to the slider 8 of the arm robot 1, the wound portions 60a, 60b and the drive gear roller 116 do not come into contact with other portions such as the slider 8, and an attachment work can be performed without considering positions of the wound portions 60a, 60b and the drive gear roller 116. Therefore, the operability can be improved as compared with the related art.

The gear portion 119 of the drive gear roller 116 may be engaged with the gear portion 62 of the wound portion 60a by changing an arrangement position of the drive gear roller 116. The protruding type linear actuator 110 is not limited to a configuration in which the disk portion is provided at the one end portion of the shaft core 122, and may be a configuration in which the disk portion is provided at the other end portion of the shaft core 122, and the gear portion 119 is formed on the outer periphery of the disk portion, or may be a configuration in which the disk portion is provided at each of the one end portion and the other end portion of the shaft core 122, and the gear portion 119 is formed on each of the outer peripheries of the disk portions. The protruding type linear actuator 110 is not limited to a configuration in which the shaft core 122 is rotatably provided at the bottom of the drive gear accommodation recess 117, and the disk portion, the gear portion 119, and the tool coupling portion 120 are coupled to the shaft core 122, and may be a configuration in which the shaft core 122 is provided at the bottom of the drive gear accommodation recess 117 so as not to rotate, and the disk portion, the gear portion 119, and the tool coupling portion 120 are rotatably provided with respect to the shaft core 122.

### Reference Sign List

10, 40, 80, 90, 110 protruding type linear actuator
11, 42 housing
15, 50, 91, 111 housing body
16, 51, 92, 112 lid portion
17a, 17b elongated plate
25a, 25b, 60a, 60b wound portion
30a, 90a drive roller
30b, 90b rotary encoder (rotatable roller, rotatable gear roller)
26a, 26b, 57a, 57b wound portion accommodation recess
29, 58 roller accommodation recess
83, 94, 120 tool coupling portion
90a1 drive gear roller
90a2 driven gear roller

## Claims

1. A protruding type linear actuator, comprising:
a pair of wound portions each including a gear portion formed on an outer periphery thereof and arranged to face each other such that the gear portions are engaged with each other;
a pair of elongated plates wound spirally around the pair of wound portions, respectively;
a drive gear roller configured to engage with the gear portion of at least one of the pair of wound portions to rotate the pair of wound portions; and
a housing configured to accommodate the pair of wound portions and the drive gear roller, wherein
in a state where the elongated plates extending respectively from the pair of wound portions are overlapped with each other, the elongated plates are pulled out from the pair of wound portions or wound around the pair of wound portions, causing the pair of elongated plates protruding from an opening of the housing to reciprocate linearly outside the housing.

2. The protruding type linear actuator according to claim 1, further comprising:
a driven gear roller configured to engage with the drive gear roller and abut against one surface of the pair of elongated plates to move the pair of elongated plates along a longitudinal direction of the elongated plates, the pair of elongated plates extending respectively from the pair of wound portions and being overlapped with each other; and
a rotatable gear roller configured to engage with the driven gear roller and sandwich the pair of overlapped elongated plates between the rotatable gear roller and the driven gear roller, wherein
the pair of wound portions, the drive gear roller, the driven gear roller, and the rotatable gear roller are accommodated in the housing.

3. A protruding type linear actuator, comprising:
a pair of wound portions arranged to face each other;
a pair of elongated plates wound spirally around the pair of wound portions, respectively;
a drive roller configured to abut against one surface of the pair of elongated plates to move the pair of elongated plates along a longitudinal direction of the elongated plates, the pair of elongated plates extending respectively from the pair of wound portions and being overlapped with each other;
a rotatable roller disposed to face the drive roller and configured to sandwich the pair of overlapped elongated plates between the drive roller and the rotatable roller; and
a housing configured to accommodate the pair of wound portions, the drive roller, and the rotatable roller, wherein
the elongated plates are pulled out from the pair of wound portions or wound around the pair of wound portions, causing the pair of elongated plates protruding from an opening of the housing to reciprocate linearly outside the housing.

4. The protruding type linear actuator according to claim 3, wherein
the pair of elongated plates are each made up of a strip-shaped metal plate or a strip-shaped resin plate, and each have a concave surface on a front surface and a convex portion on a back surface,
the drive roller and the rotatable roller are each configured to have a columnar shape and have an outer peripheral surface made of a soft resin member, and
the drive roller and the rotatable roller are in contact with each other in a state where the pair of elongated plates are not sandwiched therebetween, and the convex portions of the elongated plates are brought into contact with each other such that the pair of elongated plates are overlapped with each other.

5. The protruding type linear actuator according to claim 3, further comprising:
a tool coupling portion that is provided on the drive roller and protrudes to the outside of the housing, and to which a tool is detachably coupled.

6. A protruding type linear actuator, comprising:
a pair of wound portions arranged to face each other, around which elongated plates are respectively wound spirally;
a housing configured to accommodate the pair of wound portions therein, bring the elongated plates into contact with each other such that the elongated plates extending respectively from the pair of wound portions are overlapped with each other, and cause overlapped free end portions of the pair of elongated plates to protrude to the outside from an opening;
a drive roller accommodated in the housing and configured to abut against one surface of the pair of overlapped elongated plates to move the pair of elongated plates along a longitudinal direction of the elongated plates; and
a rotatable roller accommodated in the housing, disposed to face the drive roller, and configured to sandwich the pair of overlapped elongated plates between the drive roller and the rotatable roller, wherein
the housing includes
a housing body including a pair of wound portion accommodation recesses configured to respectively accommodate the pair of wound portions, and a roller accommodation recess configured to accommodate the drive roller and the rotatable roller, and
a lid portion configured to be detachably fixed to a body-side installation surface of the housing body in which the pair of wound portion accommodation recesses and the roller accommodation recess are formed, and to be integrated with the housing body to cover the pair of wound portions respectively accommodated in the pair of wound portion accommodation recesses, and the drive roller and the rotatable roller accommodated in the roller accommodation recess, and
the elongated plates are pulled out from the pair of wound portions or wound around the pair of wound portions, causing the pair of elongated plates protruding from the opening of the housing to reciprocate linearly outside the housing.

7. The protruding type linear actuator according to claim 6, wherein
the rotatable roller is a rotary encoder, the rotary encoder is configured to rotate in response to the linear reciprocation of the elongated plates, and a position of the free end portions of the elongated plates is determined based on a rotation direction and the number of rotations of the rotary encoder.

8. The protruding type linear actuator according to claim 6, wherein
the drive roller and the rotatable roller are disposed in the housing within a region that is between the pair of wound portions arranged to face each other and does not exceed an imaginary line connecting top portions of outer peripheries of the pair of wound portions.

9. The protruding type linear actuator according to claim 6, wherein
the pair of wound portions are positioned on a second surface side facing a first surface on which the opening of the housing is formed, and the elongated plates extend from a plate separation portion provided at a position where the wound portions face each other,
the drive roller and the rotatable roller are disposed between the pair of wound portions, and
in the housing body, plate guide recesses are formed, the plate guide recesses being configured to guide the elongated plates extending from the plate separation portion to approach each other from the plate separation portion of the pair of wound portions toward a position between the drive roller and the rotatable roller in the roller accommodation recess.

10. The protruding type linear actuator according to claim 9, wherein
each of the plate guide recesses is formed to extend toward the roller accommodation recess along a tangential direction from a columnar inner peripheral surface of the corresponding wound portion accommodation recess formed in accordance with an outer shape of the wound portion.

11. The protruding type linear actuator according to claim 6, wherein
the pair of wound portions are engaged with each other by gear portions formed on respective outer peripheries thereof, and rotation of one of the wound portions causes the other wound portion to rotate.

12. The protruding type linear actuator according to claim 6, wherein
at least one of the pair of wound portions is provided with a winding drive device configured to rotate the wound portion to wind the elongated plate around the wound portion.

13. The protruding type linear actuator according to claim 11, further comprising:
a stopper configured to be disengaged from a tooth groove of the gear portion when the pair of wound portions are rotated, and to be inserted into the tooth groove to maintain a nonrotating state of the wound portions when the pair of wound portions are stopped.

14. The protruding type linear actuator according to claim 6, wherein
in the housing, a through hole, which penetrates a thickness along a rotation axis direction of the pair of wound portions, is formed, and
the through hole has a configuration that allows wiring of an electronic device disposed on an outer surface of the housing to be inserted therethrough.

15. The protruding type linear actuator according to any one of claims 6 to 14, wherein
free ends of the pair of elongated plates are provided with at least one of an electronic device, a hand robot, a screen sheet of a screen device, a lighting device, and a pressing element.
